# EUROPEAN PATENT APPLICATION

(11) **EP 4 618 484 A1**
(43) Date of publication of application: **17.09.2025**
(21) Application number: 22964816.7
(22) Date of filing: 10.11.2022
(51) Int. Cl.: H04L 27/00

(54) **DATA STREAM SYNCHRONIZATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: SHEN, Yang, Beijing 100085 (CN); WU, Jinhua, Beijing 100085 (CN)
(74) Representative: Dehns Germany Partnerschaft mbB
(86) International application number: PCT/CN2022/131236
(87) International publication number: WO 2024/098347

(57) **Abstract**

Embodiments of the present disclosure relate to a data stream synchronization method and apparatus, a communication device, and a storage medium. The method comprises: a user plane function (UPF) determines that a synchronization delay difference between at least two data streams is greater than a threshold value, and carries out time synchronization on the at least two data streams, wherein the synchronization delay difference comprises a time difference between data packets, which require to be synchronized, of the at least two data streams.

## Description

### TECHNICAL FIELD

The present disclosure relates to, but is not limited to, the field of wireless communication technology, and in particular, to a method and device for synchronizing data flows, a communication device, and a storage medium.

### BACKGROUND

For an extended reality (XR) service application, a plurality of traffic flows (data flows) from one or more user equipments (UEs) may be included. A plurality of traffic flows travel between an XR application server and the UE through one or more user plane functions (UPFs) and a base station (for example, gNB). The plurality of traffic flows (data flows) collaborate to achieve a single service, thus packets of different traffic flows (data flows) need to be correlated and synchronized. To achieve the synchronization between the plurality of traffic flows (data flows), the XR application server may send the down link traffic at a similar time.

### SUMMARY

In view of the above, embodiments of the present disclosure provide a method and device for synchronizing data flows, a communication device, and a storage medium.

A first aspect of embodiments of the present disclosure provides a method for synchronizing data flows, performed by a user plane function (UPF), and including:
determining that a synchronization delay difference between at least two data flows is larger than a threshold, and performing a time synchronization on the at least two data flows, wherein the synchronization delay difference includes a time difference between to-be-synchronized packets of the at least two data flows.

In an embodiment, performing the time synchronization on the at least two data flows includes:
buffering a packet of a first data flow of the at least two data flows, wherein a synchronization delay difference between the first data flow and a second data flow of the at least two data flows is larger than the threshold, and a packet of the second data flow arrives at the UPF after the packet of the first data flow arrives at the UPF; and
sending a buffered packet of the first data flow within a predetermined time range from a first time point, wherein the first time point includes a time point at which the packet of the second data flow arrives at the UPF.

In an embodiment, the method further includes:
receiving the threshold sent by a session management function (SMF).

A second aspect of embodiments of the present disclosure provides a method for synchronizing data flows, performed by an SMF, and including:
receiving a threshold between two synchronous data flows sent by a policy control function (PCF); and
sending the threshold to a UPF, wherein the threshold is configured for the UPF to compare the threshold with a synchronization delay difference between at least two synchronous data flows and to determine a time synchronization for the at least two data flows based on a comparing result from the comparing, wherein the synchronization delay difference includes a time difference between to-be-synchronized packets of the at least two data flows.

In an embodiment, the threshold is configured for the UPF to buffer a packet of a first data flow of the at least two data flows when determining that a synchronization delay difference between the packet of the first data flow and a packet of a second data flow of the at least two data flows is larger than the threshold, and to send a buffered packet of the first data flow within a predetermined time range from a first time point, wherein the first time point includes a time point at which the packet of the second data flow arrives at the UPF, and the packet of the second data flow arrives at the UPF after the packet of the first data flow arrives at the UPF.

A third aspect of embodiments of the present disclosure provides a method for synchronizing data flows, performed by a PCF, and including:
determining a threshold between at least two synchronous data flows, wherein a UPF performs a time synchronization on at least two data flows when a synchronization delay difference between the at least two synchronous data flows is larger than the threshold, and the synchronization delay difference includes a time difference between to-be-synchronized packets of the at least two data flows.

In an embodiment, the method further includes: sending the threshold to an SMF.

In an embodiment, determining the threshold between the at least two synchronous data flows includes:
receiving the threshold sent by an application function (AF).

A fourth aspect of embodiments of the present disclosure provides a method for synchronizing data flows, performed by an SMF, and including:
determining that a synchronization delay difference between at least two data flows is larger than a threshold, and performing a time synchronization on the at least two data flows, wherein the synchronization delay difference includes a time difference between to-be-synchronized packets of the at least two data flows.

In an embodiment, the method further includes:
sending first report information to a PCF, wherein the first report information is configured to indicate that a synchronization delay difference between a first data flow and a second data flow is larger than the threshold, and the at least two data flows include the first data flow and the second data flow;
receiving, from the PCT, a policy control and charging (PCC) rule carrying a packet delay budget (PDB) of the first data flow and/or a PCC rule carrying a PDB of the second data flow, wherein the PDB of the first data flow and/or the PDB of the second data flow is updated by the PCF based on the synchronization delay difference indicated by the first report information; and
binding the first data flow and/or the second data flow to a quality of service (QoS) flow of a corresponding PDB respectively, wherein the PDB of the first data flow and/or the PDB of the second data flow is configured for an access network device to control an air interface transmission delay of the QoS flow to synchronize the at least two data flows.

In an embodiment, sending the first report information to the PCF includes:
sending the first report information to the PCF in response to receiving second report information from a UPF, wherein the second report information is configured to indicate at least the synchronization delay difference, and the second report information is sent by the UPF when determining that the synchronization delay difference is larger than the threshold.

In an embodiment, the method further includes:
determining that the PCF subscribes to the first report information to the SMF and subscribing to the second report information to the UPF.

In an embodiment, the method further includes:
receiving the threshold sent by the PCF; and
sending the threshold to the UPF.

A fifth aspect of embodiments of the present disclosure provides a method for synchronizing data flows, performed by a PCF, and including:
determining a threshold between at least two synchronous data flows, wherein an SMF performs a time synchronization on at least two data flows when a synchronization delay difference between the at least two synchronous data flows is larger than the threshold, and the synchronization delay difference includes a time difference between to-be-synchronized packets of the at least two data flows.

In an embodiment, the method further including: sending the threshold to the SMF.

In an embodiment, the method further includes:
receiving first report information sent by the SMF, wherein the first report information is configured to indicate that a synchronization delay difference between a first data flow and a second data flow is larger than the threshold, and the first data flow and the second data flow belong to the at least two data flows;
updating a PDB associated with the first data flow and/or a PDB associated with the second data flow based on the synchronization delay difference indicated by the first report information; and
sending, to the SMF, a PCC rule carrying the PDB of the first data flow and/or a PCC rule carrying the PDB of the second data flow, wherein the PDB of the first data flow and/or the PDB of the second data flow is configured for an access network device to control an air interface transmission delay of a QoS flow to synchronize the at least two data flows.

In an embodiment, the first report information is subscribed to by the PCF to the SMF.

In an embodiment, determining the threshold between the at least two synchronous data flows includes:
receiving the threshold sent by an AF.

A sixth aspect of embodiments of the present disclosure provides a method for synchronizing data flows, performed by a UPF, and including:
determining a synchronization delay difference between at least two synchronous data flows, wherein the synchronization delay difference includes a time difference between to-be-synchronized packets of the at least two data flows; and
sending at least second report information to an SMF in response to that the synchronization delay difference being larger than a threshold, wherein the second report information is at least configured to indicate the synchronization delay difference, and is configured for the SMF to perform a time synchronization on the at least two data flows.

In an embodiment, the method further includes:
receiving the threshold sent by the SMF.

In an embodiment, the second report information is configured to indicate at least a synchronization delay difference between a first data flow and a second data flow of the at least two synchronous data flows.

In an embodiment, the second report information is configured for the SMF to send first report information to a PCF and for the PCF to determine a PDB of the first data flow and/or a PDB of the second data flow based on the synchronization delay difference; and wherein the PDB of the first data flow and/or the PDB of the second data flow is configured for an access network device to control an air interface transmission delay of a QoS flow to synchronize the at least two data flows.

A seventh aspect of embodiments of the present disclosure provides a device for synchronizing data flows, provided in a UPF and including:
a processing module, configured to determine that a synchronization delay difference between at least two data flows is larger than a threshold, and perform a time synchronization on the at least two data flows, wherein the synchronization delay difference includes a time difference between to-be-synchronized packets of the at least two data flows.

In an embodiment, the processing module is configured to buffer a packet of a first data flow of the at least two data flows, wherein a synchronization delay difference between the first data flow and a second data flow of the at least two data flows is larger than the threshold, and a packet of the second data flow arrives at the UPF after the packet of the first data flow arrives at the UPF; and
the device further includes a transceiver module, configured to send a buffered packet of the first data flow within a predetermined time range from a first time point, wherein the first time point includes a time point at which the packet of the second data flow arrives at the UPF.

In an embodiment, the device further includes:
a transceiver module, configured to receive the threshold sent by an SMF.

An eighth aspect of embodiments of the present disclosure provides a device for synchronizing data flows, provided in an SMF, and including a transceiver module configured to:
receive a threshold between two synchronous data flows sent by a PCF; and
send the threshold to a UPF, wherein the threshold is configured for the UPF to compare the threshold with a synchronization delay difference between at least two synchronous data flows and to determine a time synchronization for the at least two data flows based on a comparing result from the comparing, wherein the synchronization delay difference includes a time difference between to-be-synchronized packets of the at least two data flows.

In an embodiment, the threshold is configured for the UPF to buffer a packet of a first data flow of the at least two data flows when determining that a synchronization delay difference between the packet of the first data flow and a packet of a second data flow of the at least two data flows is larger than the threshold, and to send a buffered packet of the first data flow within a predetermined time range from a first time point, wherein the first time point includes a time point at which the packet of the second data flow arrives at the UPF, and the packet of the second data flow arrives at the UPF after the packet of the first data flow arrives at the UPF.

A nineth aspect of embodiments of the present disclosure provides a device for synchronizing data flows, provided in a PCF, and including:
a processing module, configured to determine a threshold between at least two synchronous data flows, wherein a UPF performs a time synchronization on at least two data flows when a synchronization delay difference between the at least two synchronous data flows is larger than the threshold, and the synchronization delay difference includes a time difference between to-be-synchronized packets of the at least two data flows.

In an embodiment, the device further includes:
a transceiver module, configured to send the threshold to an SMF.

In an embodiment, the device further includes:
a transceiver module, configured to receive the threshold sent by an AF.

A tenth aspect of embodiments of the present disclosure provides a device for synchronizing data flows, provided in an SMF, and including:
a processing module, configured to determine that a synchronization delay difference between at least two data flows is larger than a threshold, and performing a time synchronization on the at least two data flows, wherein the synchronization delay difference includes a time difference between to-be-synchronized packets of the at least two data flows.

In an embodiment, the device further includes a transceiver module configured to:
send first report information to a PCF, wherein the first report information is configured to indicate that a synchronization delay difference between a first data flow and a second data flow is larger than the threshold, and the at least two data flows include the first data flow and the second data flow;
receive, from the PCT, a PCC rule carrying a PDB of the first data flow and/or a PCC rule carrying a PDB of the second data flow, wherein the PDB of the first data flow and/or the PDB of the second data flow is updated by the PCF based on the synchronization delay difference indicated by the first report information; and
the processing module is specifically configured to bind the first data flow and/or the second data flow to a QoS flow of a corresponding PDB respectively, wherein the PDB of the first data flow and/or the PDB of the second data flow is configured for an access network device to control an air interface transmission delay of the QoS flow to synchronize the at least two data flows.

In an embodiment, the transceiver module is specifically configured to:
send the first report information to the PCF in response to receiving second report information sent by a UPF, wherein the second report information is configured to indicate at least the synchronization delay difference, and the second report information is sent by the UPF when determining that the synchronization delay difference is larger than the threshold.

In an embodiment, the processing module is further configured to:
determine that the PCF subscribes to the first report information to the SMF, and subscribing to the second report information to the UPF.

In an embodiment, the transceiver module is further configured to:
receive the threshold sent by the PCF; and
send the threshold to the UPF.

An eleventh aspect of embodiments of the present disclosure provides a device for synchronizing data flows, provided in a PCF, and including:
a processing module, configured to determine a threshold between at least two synchronous data flows, wherein an SMF performs a time synchronization on at least two data flows when a synchronization delay difference between the at least two synchronous data flows is larger than the threshold, and the synchronization delay difference includes a time difference between to-be-synchronized packets of the at least two data flows.

In an embodiment, the device further includes:
a transceiver module, configured to send the threshold to the SMF.

In an embodiment, the device further includes:
a transceiver module, configured to receive first report information sent by the SMF, wherein the first report information is configured to indicate that a synchronization delay difference between a first data flow and a second data flow is larger than the threshold, and the first data flow and the second data flow belong to the at least two data flows;
the processing module is further configured to update a PDB associated with the first data flow and/or a PDB associated with the second data flow based on the synchronization delay difference indicated by the first report information; and
the transceiver module is further configured to send, to the SMF, a PCC rule carrying the PDB of the first data flow and/or a PCC rule carrying the PDB of the second data flow, wherein the PDB of the first data flow and/or the PDB of the second data flow is configured for an access network device to control an air interface transmission delay of a QoS flow to synchronize the at least two data flows.

In an embodiment, the first report information is subscribed to by the PCF to the SMF.

In an embodiment, the device further includes:
a transceiver module, configured to receive the threshold sent by an AF.

A twelfth aspect of embodiments of the present disclosure provides a device for synchronizing data flows, provided in a UPF, and including:
a processing module, configured to determine a synchronization delay difference between at least two synchronous data flows, wherein the synchronization delay difference includes a time difference between to-be-synchronized packets of the at least two data flows; and
a transceiver module, configured to send at least second report information to an SMF in response to that the synchronization delay difference being larger than a threshold, wherein the second report information is at least configured to indicate the synchronization delay difference, and is configured for the SMF to perform a time synchronization on the at least two data flows.

In an embodiment, the transceiver module is further configured to:
receive the threshold sent by the SMF.

In an embodiment, the second report information is configured to indicate at least a synchronization delay difference between a first data flow and a second data flow of the at least two synchronous data flows.

In an embodiment, the second report information is configured for the SMF to send first report information to a PCF and for the PCF to determine a PDB of the first data flow and/or a PDB of the second data flow based on the synchronization delay difference; and wherein the PDB of the first data flow and/or the PDB of the second data flow is configured for an access network device to control an air interface transmission delay of a QoS flow to synchronize the at least two data flows.

A thirteenth aspect of embodiments of the present disclosure provides a communication device, including:
a processor; and
a memory for storing executable instructions of the processor,
wherein the processor is configured to implement the device for synchronizing data flows according to any one of the first or second or third or fourth or fifth or sixth aspect when running the executable instructions.

A fourteenth aspect of embodiments of the present disclosure provides a computer storage medium having a computer executable program stored thereon that, when being executed by a processor, implements according to any one of the first or second or third or fourth or fifth or sixth aspect.

A fifteenth aspect of embodiments of the present disclosure provides a communication system including a UPF, an SMF and a PCF, the UPF is configured to implement the method according to any one of the first or sixth aspect, the SMF is configured to implement the method according to any one of the second or fourth aspect, and the PCF is configured to implement the method according to any one of the third or fifth aspect.

Embodiments of the present disclosure provide a method and device for synchronizing data flows, a communication device, and a storage medium. A UPF determines that a synchronization delay difference between at least two data flows is larger than a threshold, and performs a time synchronization on the at least two data flows, and the synchronization delay difference includes a time difference between to-be-synchronized packets of the at least two data flows. In this way, the UPF performs the time synchronization on at least two data flows when the synchronization delay difference between at least two data flows is larger than the threshold, so that the synchronization delay difference between the plurality of traffic flows may be kept within the threshold, thereby improving the user experience.

It should be understood that the above general description and the following detailed description are merely exemplary and explanatory and do not limit the present disclosure.

### BRIEF DESCRIPTION OF THE DRAWINGS

The accompanying drawings herein, which are incorporated into and form a part of the specification, illustrate embodiments that are consistent with the present disclosure and are used in conjunction with the specification to explain the principle of the embodiments of the present disclosure.
FIG. 1 is a schematic diagram of a structure of a wireless communication system according to an exemplary embodiment;
FIG. 2 is a schematic diagram of a data flow transmission according to an exemplary embodiment;
FIG. 3 is a flow diagram of a method for synchronizing data flows according to an exemplary embodiment;
FIG. 4 is a flow diagram of a method for synchronizing data flows according to an exemplary embodiment;
FIG. 5 is a schematic diagram of a data flow transmission according to an exemplary embodiment;
FIG. 6 is a flow diagram of a method for synchronizing data flows according to an exemplary embodiment;
FIG. 7 is a flow diagram of a method for synchronizing data flows according to an exemplary embodiment;
FIG. 8 is a flow diagram of a method for synchronizing data flows according to an exemplary embodiment;
FIG. 9 is a flow diagram of a method for synchronizing data flows according to an exemplary embodiment;
FIG. 10 is a flow diagram of a method for synchronizing data flows according to an exemplary embodiment;
FIG. 11 is a schematic diagram of a data flow transmission according to an exemplary embodiment;
FIG. 12 is a flow diagram of a method for synchronizing data flows according to an exemplary embodiment;
FIG. 13 is a flow diagram of a method for synchronizing data flows according to an exemplary embodiment;
FIG. 14 is a flow diagram of a method for synchronizing data flows according to an exemplary embodiment;
FIG. 15 is a flow diagram of a method for synchronizing data flows according to an exemplary embodiment;
FIG. 16 is a flow diagram of a method for synchronizing data flows according to an exemplary embodiment;
FIG. 17 is a block diagram of a device for synchronizing data flows according to an exemplary embodiment;
FIG. 18 is a block diagram of a device for synchronizing data flows according to an exemplary embodiment;
FIG. 19 is a block diagram of a device for synchronizing data flows according to an exemplary embodiment;
FIG. 20 is a block diagram of a device for synchronizing data flows according to an exemplary embodiment;
FIG. 21 is a block diagram of a device for synchronizing data flows according to an exemplary embodiment;
FIG. 22 is a block diagram of a device for synchronizing data flows according to an exemplary embodiment;
FIG. 23 is a block diagram of a UE according to an exemplary embodiment; and
FIG. 24 is a block diagram of a base station according to an examplary embodiment.

### DETAILED DESCRIPTION

Exemplary embodiments will be described herein in detail, examples of which are represented in the accompanying drawings. When the following description relates to the accompanying drawings, the same numerals in the different figures indicate the same or similar elements unless otherwise indicated. The implementations described in the following exemplary embodiments do not represent all implementations consistent with the embodiments of the present disclosure. Rather, they are only examples of devices and methods consistent with some aspects of embodiments of the present disclosure.

The term used in the embodiments of the present disclosure is used solely for the purpose of describing particular embodiments and is not intended to limit the embodiments of the present disclosure. The singular forms of "a", "said" and "the" used in the embodiments and attached claims of the present disclosure are also intended to encompass the plural forms, unless clearly indicated otherwise in the context. It is to be also understood that the term "and/or" as used herein refers to and encompasses any or all possible combinations of one or more of the associated listed items.

It is to be understood that while the terms first, second, third, etc. may be used in the embodiments of the present disclosure to describe various types of information, such information should not be limited by these terms. These terms are only used to distinguish the same type of information from one another. For example, without departing from the scope of the embodiments of the present disclosure, first indication information may also be referred to as second information, and similarly, the second information may be referred to as the first indication information. Depending on the context, the word "if" as used herein may be interpreted as "at the time of ......" or "when ......" or "in response to determining".

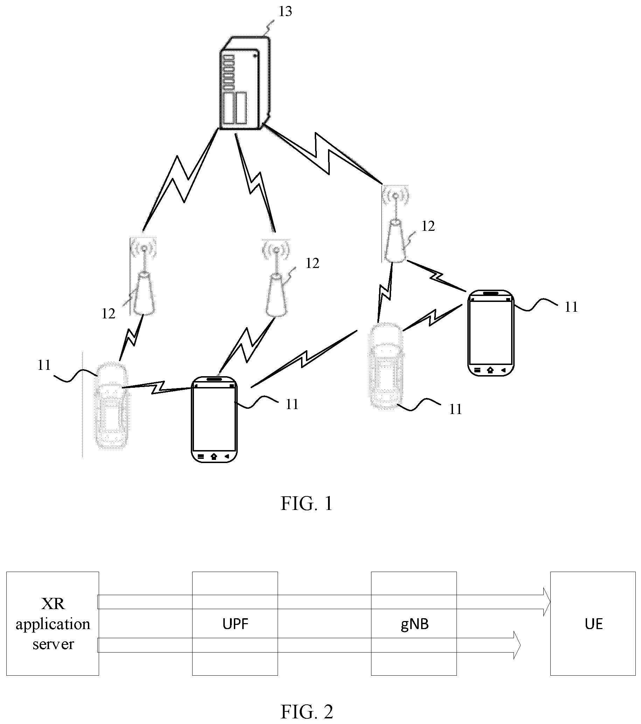

Referring to FIG. 1, FIG. 1 is a schematic structure diagram of a wireless communication system provided by an embodiment of the present disclosure. As shown in FIG. 1, the wireless communication system may include at least one terminal 11 and at least one base station 12.

The terminal 11 may be a device that provides voice and/or data connectivity to a user. The terminal 11 may communicate with one or more core network devices via a radio access network (RAN). The terminal 11 may be an IoT terminal, such as sensor device, mobile phone (or so-called 'cellular' phone), and computer with an IoT terminal, which may be, for example, fixed, portable, pocket-sized, handheld, computer-integrated, or vehicle-mounted device, for example, a station (STA), a subscriber unit, a subscriber station, a mobile station, a mobile, a remote station, an access point, a remote terminal, an access terminal, a user terminal, a user agent, a user device or a user equipment (UE). Alternatively, the terminal 11 may be an unmanned aerial vehicle device. Alternatively, the terminal 11 may be an in-vehicle device, e.g., it may be a trip computer with a wireless communication capability, or a wireless communication device externally connected to a trip computer. Alternatively, the terminal 11 may be a roadside device, e.g., it may be a street light, a signal light, or other roadside devices having a wireless communication capability.

The base station 12 may be a network device in the wireless communication system. The wireless communication system may be the 4^{th} generation mobile communication system, also known as a long term evolution (LTE) system, or may be a 5G system, also known as a new radio (NR) system or 5G NR system. Alternatively, the wireless communication system may be a further next generation system of the 5G system. The access network in the 5G system may be called NG-RAN (new generation-radio access network). Alternatively, the wireless communication system may be an MTC system.

The base station 12 may be an evolved base station (eNB) used in the 4G system. Alternatively, the base station 12 may be a base station (gNB) of a centralized distributed architecture used in the 5G system. When the base station 12 uses the centralized distributed architecture, it typically includes a central unit (CU) and at least two distributed units (DUs). The central unit is provided with a protocol stack of packet data convergence protocol (PDCP) layer, radio link control (RLC) layer, and media access control (MAC) layer, and the distributed unit is provided with a protocol stack of physical (PHY) layer. The specific implementation of the base station 12 is not limited in the embodiments of the present disclosure.

A wireless connection may be established between the base station 12 and the terminal 11 via a wireless radio. In various implementations, the wireless radio is a wireless radio based on the 4^{th} generation mobile communication network technology (4G) standard; alternatively, the wireless radio is a wireless radio based on the 5^{th} generation mobile communication network technology (5G) standard, for example, the wireless radio is the new radio; alternatively, the wireless radio may be a wireless radio based on a further next generation mobile communication network technology standard based on the 5G.

In some embodiments, an E2E (End to End) connection may also be established between the terminals 11, examples of which include V2V (vehicle to vehicle) communication, V2I (vehicle to infrastructure) communication, and V2P (vehicle to pedestrian) communication in a vehicle to everything (V2X) scenario or the like.

In some embodiments, the wireless communication system described above may further include a network management device 13.

A plurality of base stations 12 are connected to the core network device 13 respectively. The core network device 13 may be a core network device in the wireless communication system. For example, the core network device 13 may be a mobility management entity (MME) in the evolved packet core (EPC). Alternatively, the network management device may another core network device, for example, a serving gateway (SGW), a public data network gateway (PGW), a policy and charging rules function unit (PCRF), a home subscriber server (HSS) or the like. The implementation form of the core network device 13 is not limited in the embodiments of the present disclosure.

In order to facilitate the understanding of a person skilled in the art, the embodiment of the present disclosure enumerates a plurality of implementations to clearly illustrate the technical solution of the embodiment of the present disclosure. Of course, a person skilled in the art may understand that a plurality of embodiments provided in the embodiments of the present disclosures may be performed separately, or may be performed together with the method of other embodiments in the embodiments of the present disclosure, or may be performed together with some methods in other related technologies either separately or in combination therewith, which is not limited in the embodiment of the present disclosures.

As shown in FIG. 2, a synchronization delay difference may introduced because XR application traffic flows (data flows) may arrive at a UE via different paths, for example, a plurality of data flows may arrive at a UPF or a gNB at different times and eventually arrive at the UE. When the synchronization delay difference is larger than a threshold, the user experience may be seriously affected.

Some scenarios have the following requirements for the delay between a plurality of data flows:
1) The synchronization delay difference between two data flows should be less than certain values, e.g., for immersive multi-modality VR applications, the threshold for visual-tactile is less than 15ms (if the visual data is delayed compared to the tactile) or less than 50ms (if the tactile is delayed compared to the visual).
2) Specific traffic flows (data flows) have typical delay requirements, e.g., for immersive multi-modal VR UL, the maximum allowed end-to-end delay for haptic data is 5ms.

How to ensure that a synchronization delay difference between a plurality of traffic flows (data flows) may be kept within a threshold to improve the user experience is an urgent issue to be solved.

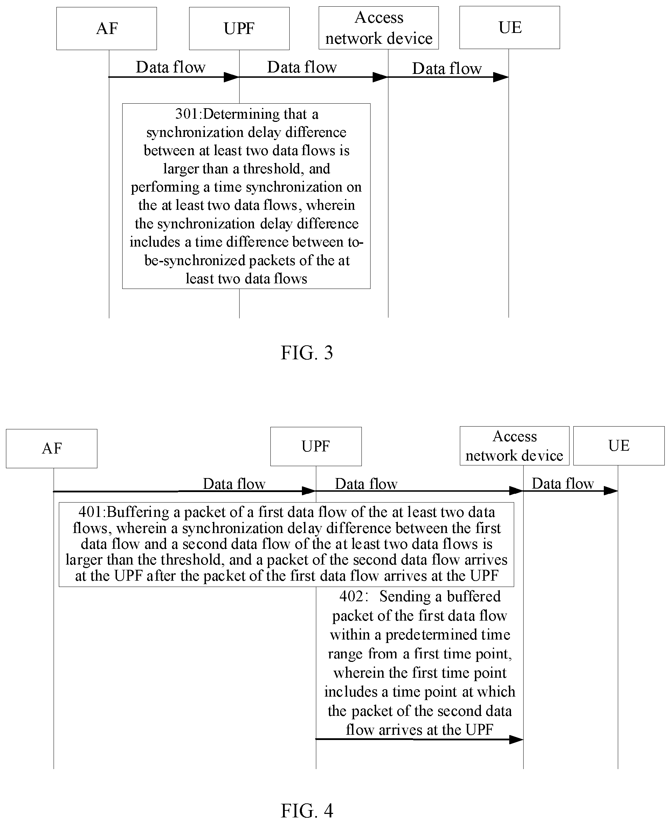

As shown in FIG. 3, an exemplary embodiment provides a method for synchronizing data flows, which may be performed by a user plane function (UPF), and includes:
step 301, determining that a synchronization delay difference between at least two data flows is larger than a threshold, and performing a time synchronization on the at least two data flows, wherein the synchronization delay difference includes a time difference between to-be-synchronized packets of the at least two data flows.

Here, a plurality of synchronous data flows may be associated with a same service. For example, the plurality of synchronous data flows may be data flows of a same XR application service. The packets of the plurality of data flows of the same service have a need to be synchronized, i.e., the packets of the respective data flows need to arrive at a UE within a predetermined time range.

In an embodiment, the at least two data flows are associated to a same user equipment (UE) or different UEs.

In a possible implementation, the plurality of synchronous data flows may be used to transmit packets for the same UE.

In a possible implementation, the plurality of synchronous data flows may be used to transmit packets for different UEs.

The number of data flows associated with each UE may be different or the same. The data associated with each UE may be different or the same.

The data flow may include one or more packets. The performing the time synchronization on the at least two data flows may be to perform time synchronization on the packets of the at least two data flows.

The time synchronization may be to synchronize the transmission times of the at least two data flows.

In a possible implementation, the performing the time synchronization on the at least two data flows includes at least one of:
synchronizing arrival times of the at least two data flows arriving at the data flow destination (e.g., the UE); and
synchronizing sending times of the at least two data flows being sent from a core network device.

The UPF may receive the data flow from an AF server (e.g., an XR application server) and send the data flow to the access network device.

In a possible implementation, the UPF may control the sending time of the data flow or the like, which thus has an effect of performing time synchronization on the at least two data flows.

An SMF may configure a transmission parameter of the data flow, thereby controlling the transmission time of the data flow, which has the effect of performing time synchronization on the at least two data flows. The transmission parameter of the data flow may include, but is not limited to, at least one of a transmission priority or a transmission time budget.

A PCF may formulate a PCC for the time synchronization for the at least two data flows.

For example, when the PCF determines that there is a threshold, it may determine that the data flows have a synchronization requirement, and therefore it may formulate the PCC for controlling the core network device to synchronize the data flows at least based on the threshold.

Here, the PCC rule may indicate a to-be-performed operation of the core network device associated with the synchronization of the data flows and a to-be-performed operation of each core network device during the synchronization of the data flows.

In a possible implementation, the core network device may perform the synchronization of the data flows according to the indication of the PCC rule.

The synchronization delay difference may include at least one of a current synchronization delay difference between the data flows or a synchronization delay difference between the data flows predicted by the core network device.

In a possible implementation, the synchronization delay difference may include a time difference between the arrivals of to-be-synchronized packets of the respective data flows at the core network device.

In a possible implementation, the synchronization delay difference between at least two synchronous data flows may include a time difference between the arrivals of the to-be-synchronized packets of the respective data flows at the UPF.

In a possible implementation, the synchronization delay difference between at least two synchronous data flows may be determined by the UPF.

The time at which the data flow arrives at the UPF may be a time at which all packets in the data flow arrive at the UPF.

In a possible implementation, the UPF may determine the synchronization delay difference between the two data flows after both the two data flows arrive at the UPF.

In a possible implementation, the UPF may start to determine whether the synchronization delay difference between the two data flows is larger than the threshold after one of the two data flows arrives at the UPF.

For example, after one of the two data flows arrives at the UPF, the UPF may starts a timer, and a timing value of the timer may be the threshold. When the timer expires, if the UPF has not received the other data flow, the UPF starts to determine that the synchronization delay difference between the two data flows is larger than the threshold.

The threshold may be determined based on the synchronization delay difference between the data flows as required by the service to which the data flows are associated. For example, when the data flow is associated with a VR UL service, the threshold may be set to be 5ms.

In a possible implementation, the threshold may be determined based on a service type of the data flow.

In a possible implementation, the threshold may be sent to the core network device by the AF sending the data flow.

Determining that the synchronization delay difference between at least two synchronous data flows is larger than the threshold may include, but is not limited to, at least one of:
determining, based on arrival times of the data flows, that the synchronization delay difference between at least two synchronous data flows is larger than the threshold; or
determining, based on received indication information, that the synchronization delay difference between at least two synchronous data flows is larger than the threshold.

In this way, the UPD performs the time synchronization on at least two data flows when the synchronization delay difference between at least two synchronous data flows is larger than the threshold, so that the synchronization delay difference between the plurality of traffic flows may be kept within the threshold, thereby improving the user experience.

In an embodiment, as shown in FIG. 4, step 301 may include:
step 401, buffering a packet of a first data flow of the at least two data flows, wherein a synchronization delay difference between the first data flow and a second data flow of the at least two data flows is larger than the threshold, and a packet of the second data flow arrives at the UPF after the packet of the first data flow arrives at the UPF; and
step 402, sending a buffered packet of the first data flow within a predetermined time range from a first time point, wherein the first time point includes a time point at which the packet of the second data flow arrives at the UPF.

Here, it may be stipulated by the PCC that the UPF performs the time synchronization on the at least two data flows when the synchronization delay difference between the at least two synchronous data flows is larger than the threshold.

When the UPF detects that the synchronization delay difference between the at least two data flows is larger than the threshold, the UPF may perform the data flow synchronization.

In a possible implementation, there may be one or more first data flows, and there may also be one or more second data flows.

In a possible implementation, the packet of the first data flow may arrive at the UPF before the packet of the second data flow arrives at the UPF.

In a possible implementation, the first data flow may include a data flow with a packet arriving first at the UPF.

In a possible implementation, the UPF may buffer the packet of the first data flow that arrives first and send the buffered packet of the first data flow within the time predetermined range from the first time point.

In a possible implementation, the UPF may send the packet of the second data flow at the first time point.

In a possible implementation, the predetermined time range may be determined based at least on the requirement of the data flow for synchronization.

In a possible implementation, the predetermined time range is less than a synchronization time requirement of the data flow for synchronization.

In a possible implementation, the predetermined time range may be determined based on a delay duration for the UPF to receive and send the packet of the data flow. The delay duration for the UPF to receive and send the packet of the data flow may include a time required for the UPF to receive the packet of the data flow and to send the packet of the data flow to an access network device such as a base station.

Determining the predetermined time range based on the delay duration for the UPF to receive and send the packet of the data flow may reduce the time difference between the sending by the UPF the packet of the first data flow and the packet of the second data flow, thereby improving the synchronization of the first data flow and the second data flow.

For example, the predetermined time range may be less than the threshold.

In this way, the first data flow and the second data flow achieve synchronization during the sending thereof by the UPF, which reduces the synchronization delay difference between the first data flow and the second data flow, and improves the user experience.

In a possible implementation, the predetermined time range from the first time point may include at least one of:
a predetermined time range before the first time point; or
a predetermined time range after the first time point.

In a possible implementation, when there are a plurality of second data flows, a time point at which the packet of the second data flow arrives at the UPF last may be taken as the first time point.

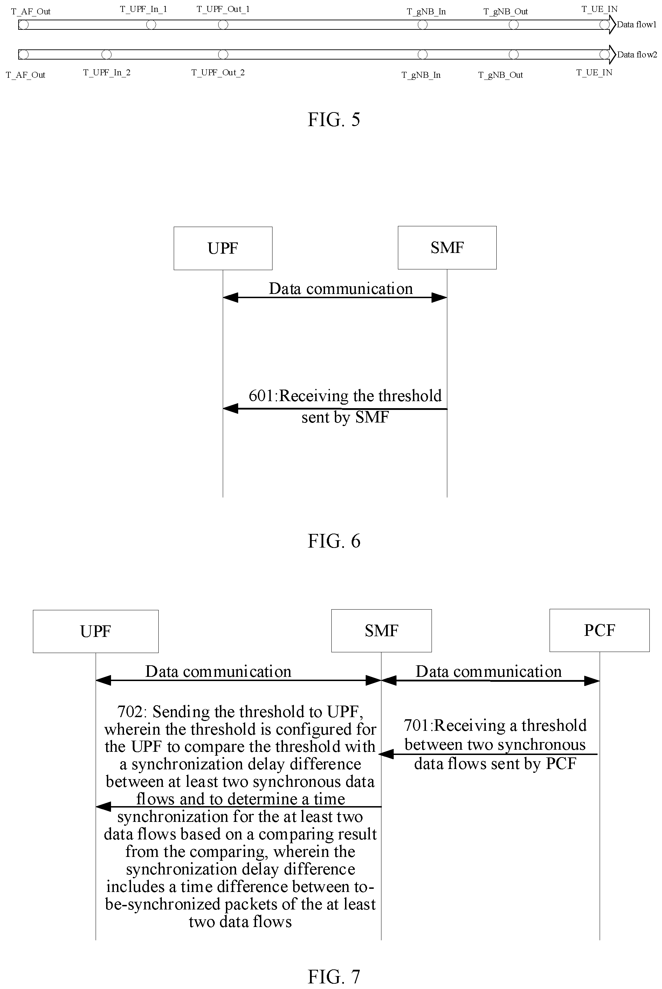

For example, as shown in FIG. 5, the time point T_UPF_In_2 at which the packet of data flow 2 arrives at the UPF is later than the time point T_UPF_In_1 at which the packet of data flow 1 arrives at the UPF, and the synchronization delay difference between the data flow 2 and the data flow 1 is larger than the threshold. The UPF may buffer the packet of data flow 1 when receiving the packet of data flow 1, and send the buffered packet of data flow 1 within a predetermined time range from the first time point when receiving the packet of data flow 2, i.e., sends the buffered packet of data flow 1 at T_UPF_Out_1, and the UPF does not buffer the packet of data flow 2, and sends the packet of data flow 2 directly after receiving the packet of data flow 2, i.e., sends the buffered packet of data flow 2 at T_UPF_Out_2. This enables the data flow 1 and the data flow 2 to be sent synchronously.

The access network device may receive the packets of the plurality of data flows that have been synchronized by the UPF and send them to the UE, thereby improving the synchronization of the packets of the plurality of data flows received by the UE. In this process, the access network device does not need to make changes for the data flow synchronization.

As shown in FIG. 6, an exemplary embodiment provides a method for synchronizing data flows, which may be performed by the UPF and includes:
step 601, receiving the threshold sent by an SMF.

The threshold may be included in a PCC rule determined by the PCF. The PCF may send the PCC rule to the SMF, so that the SMF may determine the threshold. The threshold in the PCC rule may be associated with the data flow of the service.

The threshold in the PCC may be associated with the data flow through a service identifier, an AF identifier of the data flow, a data flow identifier, or the like.

The SMF may send the threshold to the UPF.

In a possible implementation, the threshold may be subscribed to by the UPF to the SMF.

In a possible implementation, when the PCF receives the threshold from the AF in a service request, the PCF generates a PCC for the data flow (data flow group) associated with the threshold. The PCC includes the threshold received from the AF. Here, the threshold may be associated with a plurality of data flows of the service.

An embodiment of the present disclosure also provides a method for synchronizing data flows performed by an SMF. It is to be noted that the method corresponds to the embodiment at the PCF side and/or UPF side and/or access network side, and therefore the same explanation or feature will not be repeated, and may be referred to the embodiment at a corresponding side.

As shown in FIG. 7, an exemplary embodiment provides a method for synchronizing data flows, which may be performed by an SMF, and includes:
step 701, receiving a threshold between two synchronous data flows sent by a PCF;
step 702, sending the threshold to a UPF, wherein the threshold is configured for the UPF to compare the threshold with a synchronization delay difference between at least two synchronous data flows and to determine a time synchronization for the at least two data flows based on a comparing result from the comparing, wherein the synchronization delay difference includes a time difference between to-be-synchronized packets of the at least two data flows.

A PCC rule determined by the PCF may include the threshold. The PCF may send the PCC rule to the SMF, so that the SMF may determine the threshold. The threshold in the PCC rule may be associated with the data flow of a service.

The threshold in the PCC may be associated with the data flow through a service identifier, an AF identifier of the data flow, a data flow identifier, or the like.

The SMF may send the threshold to the UPF.

In a possible implementation, the threshold may be subscribed to by the UPF to the SMF.

In a possible implementation, when the PCF receives the threshold from the AF in a service request, the PCF generates a PCC for the data flow (data flow group) associated with the threshold. The PCC includes the threshold received from the AF. Here, the threshold may be associated with a plurality of data flows of the service.

The UPF may receive the data flow from an AF server (e.g., an XR application server) and send the data flow to the access network device.

The synchronization delay difference may include at least one of a current synchronization delay difference between the data flows or a synchronization delay difference between the data flows predicted by the core network device.

In a possible implementation, the synchronization delay difference may include a time difference between the arrivals of to-be-synchronized packets of the respective data flows at the core network device.

In a possible implementation, the synchronization delay difference between at least two synchronous data flows may include a time difference between the arrivals of the to-be-synchronized packets of the respective data flows at the UPF.

In a possible implementation, the synchronization delay difference between at least two synchronous data flows may be determined by the UPF.

The time at which the data flow arrives at the UPF may be a time at which all packets in the data flow arrive at the UPF.

In a possible implementation, the UPF may determine the synchronization delay difference between the two data flows after both the two data flows arrive at the UPF.

In a possible implementation, the UPF may start to determine whether the synchronization delay difference between the two data flows is larger than the threshold after one of the two data flows arrives at the UPF.

For example, after one of the two data flows arrives at the UPF, the UPF may starts a timer, and a timing value of the timer may be the threshold. When the timer expires, if the UPF has not received the other data flow, the UPF starts to determine that the synchronization delay difference between the two data flows is larger than the threshold.

In a possible implementation, the UPF may control the sending time of the data flow or the like, which thus has an effect of performing time synchronization on the at least two data flows.

In this way, the UPF performs the time synchronization on at least two data flows when the synchronization delay difference between at least two synchronous data flows is larger than the threshold, so that the synchronization delay difference between the plurality of traffic flows may be kept within the threshold, thereby improving the user experience.

In an embodiment, the threshold is configured for the UPF to buffer a packet of a first data flow of the at least two data flows when determining that a synchronization delay difference between the packet of the first data flow and a packet of a second data flow of the at least two data flows is larger than the threshold, and to send a buffered packet of the first data flow within a predetermined time range from a first time point, wherein the first time point includes a time point at which the packet of the second data flow arrives at the UPF, and the packet of the second data flow arrives at the UPF after the packet of the first data flow arrives at the UPF.

Here, it may be stipulated by the PCC that the UPF performs the time synchronization on the at least two data flows when the synchronization delay difference between the at least two synchronous data flows is larger than the threshold.

When the UPF detects that the synchronization delay difference between the at least two data flows is larger than the threshold, the UPF may perform the data flow synchronization.

In a possible implementation, there may be one or more first data flows, and there may also be one or more second data flows.

In a possible implementation, the packet of the first data flow may arrive at the UPF before the packet of the second data flow arrives at the UPF.

In a possible implementation, the first data flow may include a data flow with a packet arriving at the UPF first.

In a possible implementation, the UPF may buffer the packet of the first data flow that arrives first and send the buffered packet of the first data flow within the time predetermined range from the first time point.

In a possible implementation, the UPF may send the packet of the second data flow at the first time point.

In a possible implementation, the predetermined time range may be determined based at least on the requirement of the data flow for synchronization.

In a possible implementation, the predetermined time range is less than a synchronization time requirement of the data flow for synchronization.

In a possible implementation, the predetermined time range may be determined based on a delay duration for the UPF to receive and send the packet of the data flow. The delay duration for the UPF to receive and send the packet of the data flow may include a time required for the UPF to receive the packet of the data flow and to send the packet of the data flow to an access network device such as a base station.

Determining the predetermined time range based on the delay duration for the UPF to receive and send the packet of the data flow may reduce the time difference between the sending by the UPF the packet of the first data flow and the packet of the second data flow, thereby improving the synchronization of the first data flow and the second data flow.

For example, the predetermined time range may be less than the threshold.

In this way, the first data flow and the second data flow achieve synchronization during the sending thereof by the UPF, which reduces the synchronization delay difference between the first data flow and the second data flow, and improves the user experience.

In a possible implementation, the predetermined time range from the first time point may include at least one of:
a predetermined time range before the first time point; or
a predetermined time range after the first time point.

In a possible implementation, when there are a plurality of second data flows, a time point at which the packet of the second data flow arrives at the UPF last may be taken as the first time point.

For example, as shown in FIG. 5, the time point T_UPF_In_2 at which the packet of data flow 2 arrives at the UPF is later than the time point T_UPF_In_1 at which the packet of data flow 1 arrives at the UPF, and the synchronization delay difference between the data flow 2 and the data flow 1 is larger than the threshold. The UPF may buffer the packet of data flow 1 when receiving the packet of data flow 1, and send the buffered packet of data flow 1 within a predetermined time range from the first time point when receiving the packet of data flow 2, i.e., sends the buffered packet of data flow 1 at T_UPF_Out_1, and the UPF does not buffer the packet of data flow 2, and sends the packet of data flow 2 directly after receiving the packet of data flow 2, i.e., sends the buffered packet of data flow 2 at T_UPF_Out_2. This enables the data flow 1 and the data flow 2 to be sent synchronously.

The access network device may receive the packets of the plurality of data flows that have been synchronized by the UPF and send them to the UE, thereby improving the synchronization of the packets of the plurality of data flows received by the UE. In this process, the access network device does not need to make changes for the data flow synchronization.

An embodiment of the present disclosure also provides a method for synchronizing data flows performed by a PCF. It is to be noted that the method corresponds to the embodiment at the SMF side and/or UPF side and/or access network side, and therefore the same explanation or feature will not be repeated, and may be referred to the embodiment at a corresponding side.

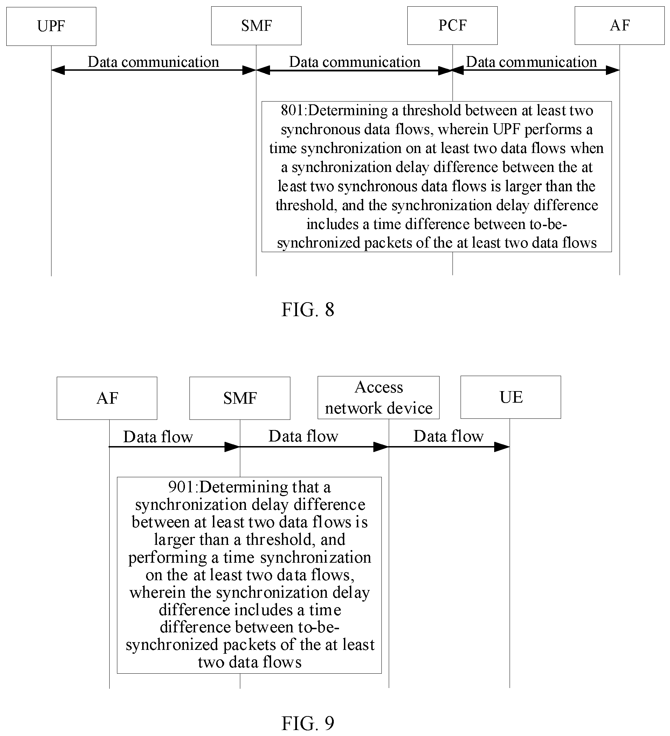

As shown in FIG. 8, an exemplary embodiment provides a method for synchronizing data flows, which may be performed by a PCF, and includes:
step 801, determining a threshold between at least two synchronous data flows, wherein a UPF performs a time synchronization on at least two data flows when a synchronization delay difference between the at least two synchronous data flows is larger than the threshold, and the synchronization delay difference includes a time difference between to-be-synchronized packets of the at least two data flows.

Here, a plurality of synchronous data flows may be associated with a same service. For example, the plurality of synchronous data flows may be data flows of a same XR application service. The packets of the plurality of data flows of the same service have a need to be synchronized, i.e., the packets of the respective data flows need to arrive at a UE within a predetermined time range.

Here, a plurality of synchronous data flows may be associated with a same service. For example, the plurality of synchronous data flows may be data flows of a same XR application service. The packets of the plurality of data flows of the same service have a need to be synchronized, i.e., the packets of the respective data flows need to arrive at a UE within a predetermined time range.

In an embodiment, the at least two data flows are associated to a same user equipment (UE) or different UEs.

In a possible implementation, the plurality of synchronous data flows may be used to transmit packets for the same UE.

In a possible implementation, the plurality of synchronous data flows may be used to transmit packets for different UEs.

The number of data flows associated with each UE may be different or the same. The data associated with each UE may be different or the same.

The data flow may include one or more packets. The performing the time synchronization on the at least two data flows may be to perform time synchronization on the packets of the at least two data flows.

The time synchronization may be to synchronize the transmission times of the at least two data flows.

In a possible implementation, the performing the time synchronization on the at least two data flows includes at least one of:
synchronizing arrival times of the at least two data flows arriving at the data flow destination (e.g., the UE); and
synchronizing sending times of the at least two data flows being sent from a core network device.

The UPF may receive the data flow from an AF server (e.g., an XR application server) and send the data flow to the access network device.

In a possible implementation, the UPF may control the sending time of the data flow or the like, which thus has an effect of performing time synchronization on the at least two data flows.

An SMF may configure a transmission parameter of the data flow, thereby controlling the transmission time of the data flow, which has the effect of performing time synchronization on the at least two data flows. The transmission parameter of the data flow may include, but is not limited to, at least one of a transmission priority or a transmission time budget.

A PCF may formulate a PCC for the time synchronization for the at least two data flows.

For example, when the PCF determines that there is a threshold, it may determine that the data flows have a synchronization requirement, and therefore it may formulate the PCC for controlling the core network device to synchronize the data flows at least based on the threshold.

Here, the PCC rule may indicate a to-be-performed operation of the core network device associated with the synchronization of the data flows and a to-be-performed operation of each core network device during the synchronization of the data flows.

In a possible implementation, the core network device may perform the synchronization of the data flows according to the indication of the PCC rule.

The synchronization delay difference may include at least one of a current synchronization delay difference between the data flows or a synchronization delay difference between the data flows predicted by the core network device.

In a possible implementation, the synchronization delay difference may include a time difference between the arrivals of to-be-synchronized packets of the respective data flows at the core network device.

In a possible implementation, the synchronization delay difference between at least two synchronous data flows may include a time difference between the arrivals of the to-be-synchronized packets of the respective data flows at the UPF.

In a possible implementation, the synchronization delay difference between at least two synchronous data flows may be determined by the UPF.

The time at which the data flow arrives at the UPF may be a time at which all packets in the data flow arrive at the UPF.

In a possible implementation, the UPF may determine the synchronization delay difference between the two data flows after both the two data flows arrive at the UPF.

In a possible implementation, the UPF may start to determine whether the synchronization delay difference between the two data flows is larger than the threshold after one of the two data flows arrives at the UPF.

For example, after one of the two data flows arrives at the UPF, the UPF may starts a timer, and a timing value of the timer may be the threshold. When the timer expires, if the UPF has not received the other data flow, the UPF starts to determine that the synchronization delay difference between the two data flows is larger than the threshold.

The threshold may be determined based on the synchronization delay difference between the data flows as required by the service to which the data flows are associated. For example, when the data flow is associated with a VR UL service, the threshold may be set to be 5ms.

In a possible implementation, the threshold may be determined based on a service type of the data flow.

In a possible implementation, the threshold may be sent to the core network device by the AF sending the data flow.

Determining that the synchronization delay difference between at least two synchronous data flows is larger than the threshold may include, but is not limited to, at least one of:
determining, based on arrival times of the data flows, that the synchronization delay difference between at least two synchronous data flows is larger than the threshold; or
determining, based on received indication information, that the synchronization delay difference between at least two synchronous data flows is larger than the threshold.

In this way, the UPD performs the time synchronization on at least two data flows when the synchronization delay difference between at least two synchronous data flows is larger than the threshold, so that the synchronization delay difference between the plurality of traffic flows may be kept within the threshold, thereby improving the user experience.

In a possible implementation, the UPF buffers a packet of a first data flow of the at least two data flows, wherein a synchronization delay difference between the first data flow and a second data flow of the at least two data flows is larger than the threshold, and a packet of the second data flow arrives at the UPF after the packet of the first data flow arrives at the UPF.

The UPF sends a buffered packet of the first data flow within a predetermined time range from a first time point, wherein the first time point includes a time point at which the packet of the second data flow arrives at the UPF.

Here, it may be stipulated by the PCC that the UPF performs the time synchronization on the at least two data flows when the synchronization delay difference between the at least two synchronous data flows is larger than the threshold.

When the UPF detects that the synchronization delay difference between the at least two data flows is larger than the threshold, the UPF may perform the data flow synchronization.

In a possible implementation, there may be one or more first data flows, and there may also be one or more second data flows.

In a possible implementation, the packet of the first data flow may arrive at the UPF before the packet of the second data flow arrives at the UPF.

In a possible implementation, the first data flow may include a data flow with a packet arriving first at the UPF.

In a possible implementation, the UPF may buffer the packet of the first data flow that arrives first and send the buffered packet of the first data flow within the time predetermined range from the first time point.

In a possible implementation, the UPF may send the packet of the second data flow at the first time point.

In a possible implementation, the predetermined time range may be determined based at least on the requirement of the data flow for synchronization.

In a possible implementation, the predetermined time range is less than a synchronization time requirement of the data flow for synchronization.

In a possible implementation, the predetermined time range may be determined based on a delay duration for the UPF to receive and send the packet of the data flow. The delay duration for the UPF to receive and send the packet of the data flow may include a time required for the UPF to receive the packet of the data flow and to send the packet of the data flow to an access network device such as a base station.

Determining the predetermined time range based on the delay duration for the UPF to receive and send the packet of the data flow may reduce the time difference between the sending by the UPF the packet of the first data flow and the packet of the second data flow, thereby improving the synchronization of the first data flow and the second data flow.

For example, the predetermined time range may be less than the threshold.

In this way, the first data flow and the second data flow achieve synchronization during the sending thereof by the UPF, which reduces the synchronization delay difference between the first data flow and the second data flow, and improves the user experience.

In a possible implementation, the predetermined time range from the first time point may include at least one of:
a predetermined time range before the first time point; or
a predetermined time range after the first time point.

In a possible implementation, when there are a plurality of second data flows, a time point at which the packet of the second data flow arrives at the UPF last may be taken as the first time point.

For example, as shown in FIG. 5, the time point T_UPF_In_2 at which the packet of data flow 2 arrives at the UPF is later than the time point T_UPF_In_1 at which the packet of data flow 1 arrives at the UPF, and the synchronization delay difference between the data flow 2 and the data flow 1 is larger than the threshold. The UPF may buffer the packet of data flow 1 when receiving the packet of data flow 1, and send the buffered packet of data flow 1 within a predetermined time range from the first time point when receiving the packet of data flow 2, i.e., sends the buffered packet of data flow 1 at T_UPF_Out_1, and the UPF does not buffer the packet of data flow 2, and sends the packet of data flow 2 directly after receiving the packet of data flow 2, i.e., sends the buffered packet of data flow 2 at T_UPF_Out_2. This enables the data flow 1 and the data flow 2 to be sent synchronously.

The access network device may receive the packets of the plurality of data flows that have been synchronized by the UPF and send them to the UE, thereby improving the synchronization of the packets of the plurality of data flows received by the UE. In this process, the access network device does not need to make changes for the data flow synchronization.

In an embodiment, the method further includes: sending the threshold to the SMF.

In an embodiment, determining the threshold between at least two synchronous data flows includes:
receiving the threshold sent by an AF.

The threshold may be included in a PCC rule determined by the PCF. The PCF may send the PCC rule to the SMF, so that the SMF may determine the threshold. The threshold in the PCC rule may be associated with the data flow of the service.

The threshold in the PCC may be associated with the data flow through a service identifier, an AF identifier of the data flow, a data flow identifier, or the like.

The SMF may send the threshold to the UPF.

In a possible implementation, the threshold may be subscribed to by the UPF to the SMF.

In a possible implementation, when the PCF receives the threshold from the AF in a service request, the PCF generates a PCC for the data flow (data flow group) associated with the threshold. The PCC includes the threshold received from the AF. Here, the threshold may be associated with a plurality of data flows of the service.

An embodiment of the present disclosure also provides a method for synchronizing data flows performed by an SMF. It is to be noted that the method corresponds to the embodiment at the PCF side and/or UPF side and/or access network side, and therefore the same explanation or feature will not be repeated, and may be referred to the embodiment at a corresponding side.

As shown in FIG. 9, an exemplary embodiment provides a method for synchronizing data flows, which may be performed by an SMF, and includes:
step 901, determining that a synchronization delay difference between at least two data flows is larger than a threshold, and performing a time synchronization on the at least two data flows, wherein the synchronization delay difference includes a time difference between to-be-synchronized packets of the at least two data flows.

Here, a plurality of synchronous data flows may be associated with a same service. For example, the plurality of synchronous data flows may be data flows of a same XR application service. The packets of the plurality of data flows of the same service have a need to be synchronized, i.e., the packets of the respective data flows need to arrive at a UE within a predetermined time range.

In an embodiment, the at least two data flows are associated to a same user equipment (UE) or different UEs.

In a possible implementation, the plurality of synchronous data flows may be used to transmit packets for the same UE.

In a possible implementation, the plurality of synchronous data flows may be used to transmit packets for different UEs.

The number of data flows associated with each UE may be different or the same. The data associated with each UE may be different or the same.

The data flow may include one or more packets. The performing the time synchronization on the at least two data flows may be to perform time synchronization on the packets of the at least two data flows.

The time synchronization may be to synchronize the transmission times of the at least two data flows.

In a possible implementation, the performing the time synchronization on the at least two data flows includes at least one of:
synchronizing arrival times of the at least two data flows arriving at the data flow destination (e.g., the UE); and
synchronizing sending times of the at least two data flows being sent from a core network device.

The UPF may receive the data flow from an AF server (e.g., an XR application server) and send the data flow to the access network device.

In a possible implementation, the UPF may control the sending time of the data flow or the like, which thus has an effect of performing time synchronization on the at least two data flows.

An SMF may configure a transmission parameter of the data flow, thereby controlling the transmission time of the data flow, which has the effect of performing time synchronization on the at least two data flows. The transmission parameter of the data flow may include, but is not limited to, at least one of a transmission priority or a transmission time budget.

A PCF may formulate a PCC for the time synchronization for the at least two data flows.

For example, when the PCF determines that there is a threshold, it may determine that the data flows have a synchronization requirement, and therefore it may formulate the PCC for controlling the core network device to synchronize the data flows at least based on the threshold.

Here, the PCC rule may indicate a to-be-performed operation of the core network device associated with the synchronization of the data flows and a to-be-performed operation of each core network device during the synchronization of the data flows.

In a possible implementation, the core network device may perform the synchronization of the data flows according to the indication of the PCC rule.

The synchronization delay difference may include at least one of a current synchronization delay difference between the data flows or a synchronization delay difference between the data flows predicted by the core network device.

In a possible implementation, the synchronization delay difference may include a time difference between the arrivals of to-be-synchronized packets of the respective data flows at the core network device.

In a possible implementation, the synchronization delay difference between at least two synchronous data flows may include a time difference between the arrivals of the to-be-synchronized packets of the respective data flows at the UPF.

In a possible implementation, the synchronization delay difference between at least two synchronous data flows may be determined by the UPF.

The time at which the data flow arrives at the UPF may be a time at which all packets in the data flow arrive at the UPF.

In a possible implementation, the UPF may determine the synchronization delay difference between the two data flows after both the two data flows arrive at the UPF.

In a possible implementation, the UPF may start to determine whether the synchronization delay difference between the two data flows is larger than the threshold after one of the two data flows arrives at the UPF.

For example, after one of the two data flows arrives at the UPF, the UPF may starts a timer, and a timing value of the timer may be the threshold. When the timer expires, if the UPF has not received the other data flow, the UPF starts to determine that the synchronization delay difference between the two data flows is larger than the threshold.

The threshold may be determined based on the synchronization delay difference between the data flows as required by the service to which the data flows are associated. For example, when the data flow is associated with a VR UL service, the threshold may be set to be 5ms.

In a possible implementation, the threshold may be determined based on a service type of the data flow.

In a possible implementation, the threshold may be sent to the core network device by the AF sending the data flow.

Determining that the synchronization delay difference between at least two synchronous data flows is larger than the threshold may include, but is not limited to, at least one of:
determining, based on arrival times of the data flows, that the synchronization delay difference between at least two synchronous data flows is larger than the threshold; or
determining, based on received indication information, that the synchronization delay difference between at least two synchronous data flows is larger than the threshold.

In this way, the SMF performs the time synchronization on at least two data flows when the synchronization delay difference between at least two synchronous data flows is larger than the threshold, so that the synchronization delay difference between the plurality of traffic flows may be kept within the threshold, thereby improving the user experience.

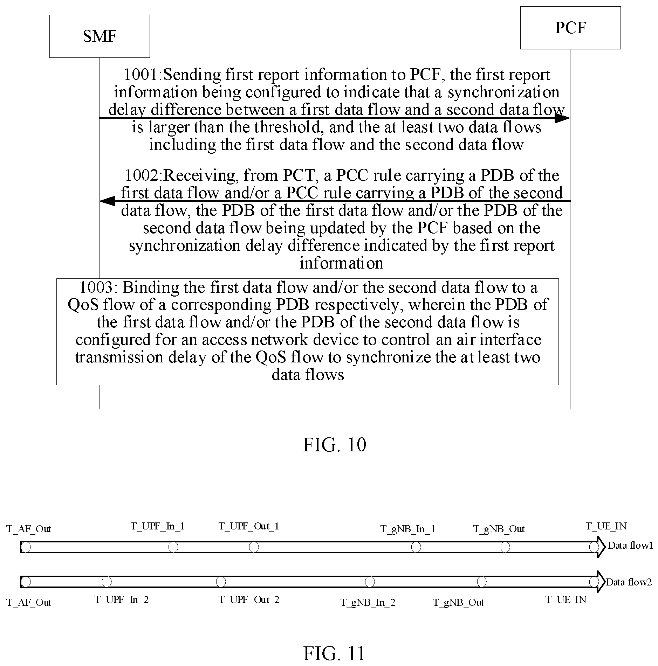

As shown in FIG. 10, an exemplary embodiment provides a method for synchronizing data flows, which may be performed by the SMF, and includes:
step 1001, sending first report information to a PCF, wherein the first report information is configured to indicate that a synchronization delay difference between a first data flow and a second data flow is larger than the threshold, and the at least two data flows include the first data flow and the second data flow;
step 1002, receiving, from the PCT, a PCC rule carrying a PDB of the first data flow and/or a PCC rule carrying a PDB of the second data flow, wherein the PDB of the first data flow and/or the PDB of the second data flow is updated by the PCF based on the synchronization delay difference indicated by the first report information; and
step 1003, binding the first data flow and/or the second data flow to a QoS flow of a corresponding PDB respectively, wherein the PDB of the first data flow and/or the PDB of the second data flow is configured for an access network device to control an air interface transmission delay of the QoS flow to synchronize the at least two data flows.

Here, the PCC may stipulate the SMF to perform the time synchronization on the at least two data flows when the synchronization delay difference between the at least two synchronous data flows is larger than the threshold.

In a possible implementation, the SMF may send the first report information of the at least two data flows to the PCF based on a subscription of the PCF.

In a possible implementation, the first report information carries the synchronization delay difference between the first data flow and the second data flow.

In a possible implementation, the synchronization delay difference may include a time difference between the arrivals of the packet of the first data flow and the packet of the second data flow at the UPF.

The PCF may determine the PDB of the first data flow and/or the second data flow based on the received synchronization delay difference.

Here, the PDB may be configured to define an upper time limit of a possible delay of the data flow between a N6 termination point and the UE (transmitted via the UPF), and the core network device and/or the access network device (e.g., the base station, etc.) may configure a transmission resource for the data flow based on the PDB. For example, the data flow with a smaller PDB is configured with a transmission resource of a higher priority to shorten the transmission time of the packet of the data flow, and the data flow with a larger PDB is configured with a transmission resource of a lower priority.

The PCF may configure the PDB for the first data flow of the at least two data flows, thereby regulating the transmission time of the first data flow to achiever a synchronization effect.

In a possible implementation, if the packet of the first data flow arrives at the UPF later than the packet of the second data flow, the PCF may configure a smaller PDB for the first data flow that arrives at the UPF later, thereby reducing the transmission duration of the packet of the first data flow at the air interface. Therefore, the synchronization of the data flows is achieved.

In a possible implementation, if the packet of the first data flow arrives at the UPF earlier than the packet of the second data flow, the PCF may configure a larger PDB for the first data flow that arrives first, thereby increasing the transmission duration of the first data flow at the air interface. Therefore, the synchronization of the data flows is achieved.

In a possible implementation, different data flows correspond to different PCC rules, and the PDB of the data flow may carry a PCC rule macro corresponding to the data flow.

The PCF may update the PDB for the first data flow or the second data flow, or may update the PDB for both the first data flow and the second data flow.

The PDB may send the determined PDB of the first data flow and/or the second data flow to the SMF.

The SMF binds the first data flow and/or the second data flow to the corresponding QoS flow based on the received PDB.

For example, the QoS corresponding to a smaller PDB has a higher transmission priority, which can increase the time duration that packet of the data flow is transmitted at the interface.

The access network device transmits the data flows by transmitting the first data flow according to the QoS flow corresponding to the first data flow, and transmitting the second data flow according to the QoS flow corresponding to the second data flow. Therefore, synchronization of the data flows is achieved.

In a possible implementation, the PCF may subscribe to an event of "a synchronization delay difference between two or more data flows of the service is larger than a threshold" to the SMF. When the SMF detects the event of "a synchronization delay difference between the two or more data flows of the service is larger than a threshold", the SMF reports the event to the PCF, i.e., sends the synchronization delay difference to the PCF.

In a possible implementation, the PCF subscribes to the first report information to the SMF, and the threshold may be sent to the SMF during the subscription process.

In a possible implementation, the threshold is sent to the PCF by the AF associated with the data flow.

After the PCF receives the first report information reported by the SMF, the PCF updates the PDB value of the one or more data flows. After the PCF updates the PDB, the SMF binds the data flow to a corresponding QoS flow thereof. The access network device (e.g., a mechanism such as gNB) processes different data flows based on relevant QoS parameters (including the updated PDB values). The synchronization of the data flows is achieved, therefore the synchronization of the packets of the plurality of data flows received by the UE is improved. In this process, the access network device does not need to make changes for the synchronization of the data flows.

For example, as shown in FIG. 11, the time point T_UPF_In_2 at which the packet of data flow 2 arrives at the UPF is later than the time point T_UPF_In_1 at which the packet of data flow 1 arrives at the UPF, and the synchronization delay difference between the data flow 2 and the data flow 1 is larger than the threshold. The PCF may determine the PDB of the data flow 1 and/or the data flow 2 based on the synchronization delay difference. For example, the PCF may configure a smaller PDB for the data flow 2 that arrives later, therefore, the transmission duration of the packet of the data flow 2 at the air interface is reduced, and thus the data flows are synchronized. The PCF may send the updated PDB to the SMF and the SMF binds the data flow 1 and/or the data flow 2 to the QoS flows corresponding to the respective PDBs. The synchronization of the data flows is achieved by the access network device controlling the transmission duration of the data flow based on the QoS flow.

In an embodiment, sending the first report information to the PCF includes:
sending the first report information to the PCF in response to receiving second report information sent by a UPF, wherein the second report information is configured to indicate at least the synchronization delay difference, and the second report information is sent by the UPF when determining that the synchronization delay difference is larger than the threshold.

The PCF may subscribe to an event of "a synchronization delay difference between two or more data flows of the service is larger than a threshold" to the SMF, i.e., subscribe to the first report information. After the SMF receives the subscription from the PCF, the SMF may send the subscription to the UPF.

The UPF may detect the synchronization delay difference between the data flows, and upon determining that the synchronization delay difference between the at least two data flows is larger than the threshold, send the second report information to the SMF.

The second report information may be configured to indicate at least the synchronization delay difference between the at least two data flows (e.g., the synchronization delay difference between the first data flow and the second data flow), and the SMT may send the synchronization delay difference to the PCF after receiving the second report information.

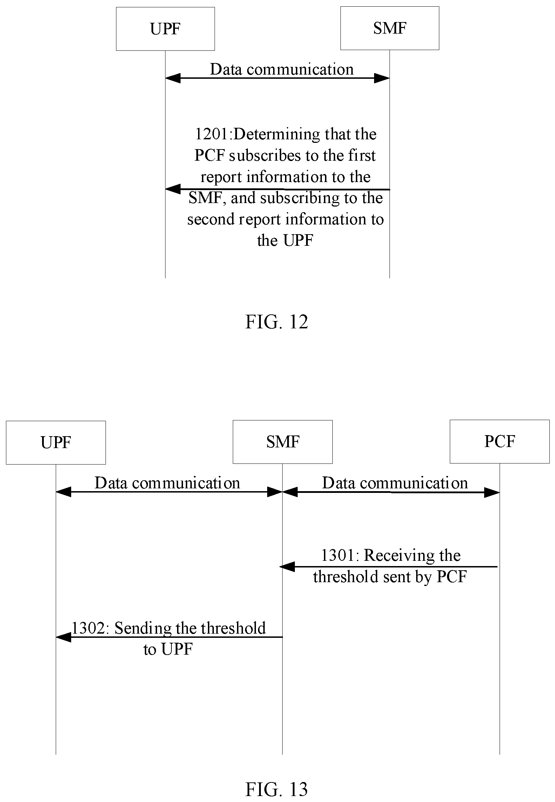

As shown in FIG. 12, an exemplary embodiment provides a method for synchronizing data flows, which may be performed by the SMF in the core network device, and includes:
step 1201, determining that the PCF subscribes to the first report information to the SMF, and subscribing to the second report information to the UPF.

The PCF may receive the threshold associated with the data flow from the AF and subscribe to the first report information to the SMF. The SMF may subscribe to the second report information to the UPF when it receives the subscription from the PCF. The UPF sends the second report information to the SMF when the synchronization delay difference is larger than the threshold.

As shown in FIG. 13, an exemplary embodiment provides a method for synchronizing data flows, which may be performed by the SMF in the core network device, and includes:
step 1301, receiving the threshold sent by the PCF; and
step 1302, sending the threshold to the UPF.

The PCF may send the threshold to the SMF in the case of subscription.

After the PCF sends the threshold to the SMF, the SMF may send the threshold to the UPF, and the UPF monitors the synchronization delay difference between the data flows and sends the second report information to the SMF when the synchronization delay difference between at least two data flows is larger than the threshold.

An embodiment of the present disclosure also provides a method for synchronizing data flows performed by a PCF. It is to be noted that the method corresponds to the embodiment at the SMF side and/or UPF side and/or access network side, and therefore the same explanation or feature will not be repeated, and may be referred to the embodiment at a corresponding side.

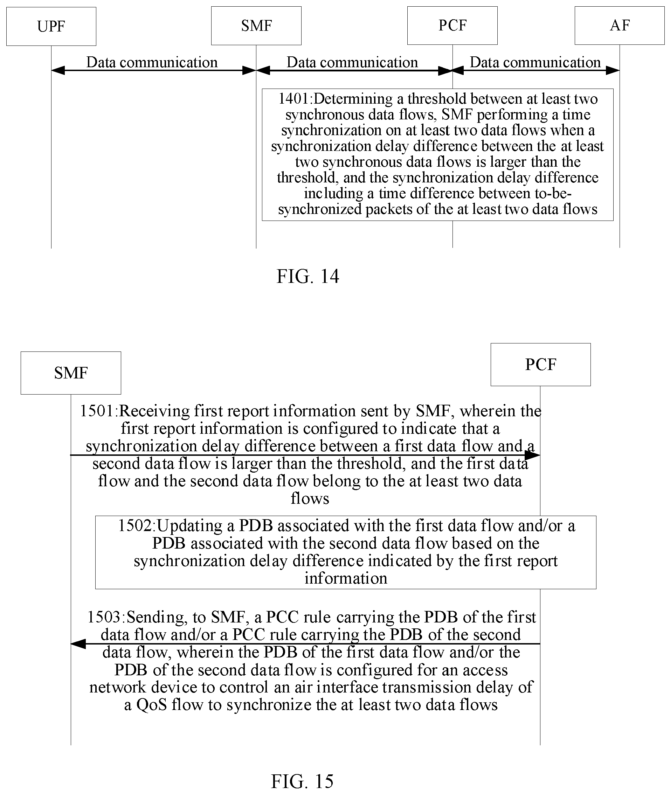

As shown in FIG. 14, an exemplary embodiment provides a method for synchronizing data flows, which may be performed by a PCF, and includes:
step 1401, determining a threshold between at least two synchronous data flows, wherein an SMF performs a time synchronization on at least two data flows when a synchronization delay difference between the at least two synchronous data flows is larger than the threshold, and the synchronization delay difference includes a time difference between to-be-synchronized packets of the at least two data flows.

Here, a plurality of synchronous data flows may be associated with a same service. For example, the plurality of synchronous data flows may be data flows of a same XR application service. The packets of the plurality of data flows of the same service have a need to be synchronized, i.e., the packets of the respective data flows need to arrive at a UE within a predetermined time range.

The data flow may include one or more packets. The performing the time synchronization on the at least two data flows may be to perform time synchronization on the packets of the at least two data flows.

The time synchronization may be to synchronize the transmission times of the at least two data flows.

In a possible implementation, the performing the time synchronization on the at least two data flows includes at least one of:
synchronizing arrival times of the at least two data flows arriving at the data flow destination (e.g., the UE); and
synchronizing sending times of the at least two data flows being sent from a core network device.

In an embodiment, the core network device includes at least one of a UPF or an SMF.

In a possible implementation, the core network device may include, but is not limited to, at least one of a UP, an SMF or a PCF.

The UPF may receive the data flow from an AF server (e.g., an XR application server) and send the data flow to the access network device.

In a possible implementation, the UPF may control the sending time of the data flow or the like, which thus has an effect of performing time synchronization on the at least two data flows.

The SMF may configure a transmission parameter of the data flow, thereby controlling the transmission time of the data flow, which has the effect of performing time synchronization on the at least two data flows. The transmission parameter of the data flow may include, but is not limited to, at least one of a transmission priority or a transmission time budget.

The PCF may formulate a PCC for the time synchronization for the at least two data flows.

For example, when the PCF determines that there is a threshold, it may determine that the data flows have a synchronization requirement, and therefore it may formulate the PCC for controlling the core network device to synchronize the data flows at least based on the threshold.

Here, the PCC rule may indicate a to-be-performed operation of the core network device associated with the synchronization of the data flows and a to-be-performed operation of each core network device during the synchronization of the data flows.

The PCF may also control the delay of the transmission of the data flow at the air interface by updating the PDB of the data flow so as to synchronize the data flows.

In a possible implementation, the core network device may perform the synchronization of the data flows according to the indication of the PCC rule.

The synchronization delay difference may include at least one of a current synchronization delay difference between the data flows or a synchronization delay difference between the data flows predicted by the core network device.

In a possible implementation, the synchronization delay difference may include a time difference between the arrivals of to-be-synchronized packets of the respective data flows at the core network device.

In a possible implementation, the synchronization delay difference between at least two synchronous data flows may include a time difference between the arrivals of the to-be-synchronized packets of the respective data flows at the UPF.

In a possible implementation, the synchronization delay difference between at least two synchronous data flows may be determined by the UPF.

The time at which the data flow arrives at the UPF may be a time at which all packets in the data flow arrive at the UPF.

In a possible implementation, the UPF may determine the synchronization delay difference between two data flows after both the two data flows arrive at the UPF.

In a possible implementation, the UPF may start to determine whether the synchronization delay difference between the two data flows is larger than the threshold after one of the two data flows arrives at the UPF.

For example, after one of the two data flows arrives at the UPF, the UPF may starts a timer, and a timing value of the timer may be the threshold. When the timer expires, if the UPF has not received the other data flow, the UPF starts to determine that the synchronization delay difference between the two data flows is larger than the threshold.

The threshold may be determined based on the synchronization delay difference between the data flows as required by the service to which the data flows are associated. For example, when the data flow is associated with a VR UL service, the threshold may be set to be 5ms.

In a possible implementation, the threshold may be determined based on a service type of the data flow.

In a possible implementation, the threshold may be sent to the core network device by the AF sending the data flow.

Determining that the synchronization delay difference between at least two synchronous data flows is larger than the threshold may include, but is not limited to, at least one of:
determining, based on arrival times of the data flows, that the synchronization delay difference between at least two synchronous data flows is larger than the threshold; or
determining, based on received indication information, that the synchronization delay difference between at least two synchronous data flows is larger than the threshold.

In this way, the SMF performs the time synchronization on at least two data flows when the synchronization delay difference between at least two synchronous data flows is larger than the threshold, so that the synchronization delay difference between the plurality of traffic flows may be kept within the threshold, thereby improving the user experience.

In an embodiment, the method further includes: sending the threshold to the SMF.

The PCF may send the threshold to the core network device such as SMF and/or UPF for use by the SMF and/or UPF to determine whether the synchronization delay difference between at least two synchronous data flows is larger than the threshold.

In an embodiment, determining the threshold between at least two synchronous data flows includes:
receiving the threshold sent by the AF.

If the PCF receives the threshold, it may determine that there is a requirement for synchronization of the data flows, and may formulate a PCC for time synchronization of the at least two data flows.

The threshold may be included in a PCC rule determined by the PCF. The PCF may send the PCC rule to the SMF, so that the SMF may determine the threshold. The threshold in the PCC rule may be associated with the data flow of the service.

The threshold in the PCC may be associated with the data flow through a service identifier, an AF identifier of the data flow, a data flow identifier, or the like.

The SMF may send the threshold to the UPF.

In a possible implementation, the threshold may be subscribed to by the UPF to the SMF.

In a possible implementation, when the PCF receives the threshold from the AF in a service request, the PCF generates a PCC for the data flow (data flow group) associated with the threshold. The PCC includes the threshold received from the AF. Here, the threshold may be associated with a plurality of data flows of the service.

In this way, the SMF performs the time synchronization on at least two data flows when the synchronization delay difference between at least two synchronous data flows is larger than the threshold, so that the synchronization delay difference between the plurality of traffic flows may be kept within the threshold, thereby improving the user experience.

As shown in FIG. 15, an exemplary embodiment provides a method for synchronizing data flows, which may be performed by the PCF, and includes:
step 1501, receiving first report information sent by the SMF, wherein the first report information is configured to indicate that a synchronization delay difference between a first data flow and a second data flow is larger than the threshold, and the first data flow and the second data flow belong to the at least two data flows;
step 1502, updating a PDB associated with the first data flow and/or a PDB associated with the second data flow based on the synchronization delay difference indicated by the first report information; and
step 1503, sending, to the SMF, a PCC rule carrying the PDB of the first data flow and/or a PCC rule carrying the PDB of the second data flow, wherein the PDB of the first data flow and/or the PDB of the second data flow is configured for an access network device to control an air interface transmission delay of a QoS flow to synchronize the at least two data flows.

Here, the PCC may stipulate the SMF to perform the time synchronization on the at least two data flows when the synchronization delay difference between the at least two synchronous data flows is larger than the threshold.

In a possible implementation, the SMF may send the first report information of the at least two data flows to the PCF based on a subscription of the PCF.

In a possible implementation, the first report information carries the synchronization delay difference between the first data flow and the second data flow.

In a possible implementation, the synchronization delay difference may include a time difference between the arrivals of the packet of the first data flow and the packet of the second data flow at the UPF.

The PCF may determine the PDB of the first data flow and/or the second data flow based on the received synchronization delay difference.

Here, the PDB may be configured to define an upper time limit of a possible delay of the data flow between a N6 termination point and the UE (transmitted via the UPF), and the core network device and/or the access network device (e.g., the base station, etc.) may configure a transmission resource for the data flow based on the PDB. For example, the data flow with a smaller PDB is configured with a transmission resource of a higher priority to shorten the transmission time of the packet of the data flow, and the data flow with a larger PDB is configured with a transmission resource of a lower priority.

The PCF may configure the PDB for the first data flow of the at least two data flows, thereby regulating the transmission time of the first data flow to achieve a synchronization effect.

In a possible implementation, if the packet of the first data flow arrives at the UPF later than the packet of the second data flow, the PCF may configure a smaller PDB for the first data flow that arrives at the UPF later, thereby reducing the transmission duration of the packet of the first data flow at the air interface. Therefore, the synchronization of the data flows is achieved.

In a possible implementation, if the packet of the first data flow arrives at the UPF earlier than the packet of the second data flow, the PCF may configure a larger PDB for the first data flow that arrives first, thereby increasing the transmission duration of the first data flow at the air interface. Therefore, the synchronization of the data flows is achieved.

In a possible implementation, different data flows correspond to different PCC rules, and the PDB of the data flow may carry a PCC rule macro corresponding to the data flow.

The PCF may update the PDB for the first data flow or the second data flow, or may update the PDB for both the first data flow and the second data flow.

The PDB may send the determined PDB of the first data flow and/or the second data flow to the SMF.

The SMF binds the first data flow and/or the second data flow to the corresponding QoS flow based on the received PDB.

For example, the QoS corresponding to a smaller PDB has a higher transmission priority, which can increase the time duration that packet of the data flow is transmitted at the interface.

The access network device transmits the data flows by transmitting the first data flow according to the QoS flow corresponding to the first data flow, and transmitting the second data flow according to the QoS flow corresponding to the second data flow. Therefore, synchronization of the data flows is achieved.

In a possible implementation, the PCF may subscribe to an event of "a synchronization delay difference between two or more data flows of the service is larger than a threshold" to the SMF. When the SMF detects the event of "a synchronization delay difference between the two or more data flows of the service is larger than a threshold", the SMF reports the event to the PCF, i.e., sends the synchronization delay difference to the PCF.

In a possible implementation, the PCF subscribes to the first report information to the SMF, and the threshold may be sent to the SMF during the subscription process.

In a possible implementation, the threshold is sent to the PCF by the AF associated with the data flow.

After the PCF receives the first report information reported by the SMF, the PCF updates the PDB value of the one or more data flows. After the PCF updates the PDB, the SMF binds the data flow to a corresponding QoS flow thereof. The access network device (e.g., a mechanism such as gNB) processes different data flows based on relevant QoS parameters (including the updated PDB values). The synchronization of the data flows is achieved, therefore the synchronization of the packets of the plurality of data flows received by the UE is improved. In this process, the access network device does not need to make changes for the synchronization of the data flows.

For example, as shown in FIG. 11, the time point T_UPF_In_2 at which the packet of data flow 2 arrives at the UPF is later than the time point T_UPF_In_1 at which the packet of data flow 1 arrives at the UPF, and the synchronization delay difference between the data flow 2 and the data flow 1 is larger than the threshold. The PCF may determine the PDB of the data flow 1 and/or the data flow 2 based on the synchronization delay difference. For example, the PCF may configure a smaller PDB for the data flow 2 that arrives later, therefore, the transmission duration of the packet of the data flow 2 at the air interface is reduced, and thus the data flows are synchronized. The PCF may send the updated PDB to the SMF and the SMF binds the data flow 1 and/or the data flow 2 to the QoS flows corresponding to the respective PDBs. The synchronization of the data flows is achieved by the access network device controlling the transmission duration of the data flow based on the QoS flow.

In an embodiment, the first report information is subscribed to by the PCF to the SMF.

In a possible implementation, the SMF sends sending the first report information to the PCF in response to receiving second report information sent by a UPF, wherein the second report information is configured to indicate at least the synchronization delay difference, and the second report information is sent by the UPF when determining that the synchronization delay difference is larger than the threshold.

The PCF may subscribe to an event of "a synchronization delay difference between two or more data flows of the service is larger than a threshold" to the SMF, i.e., subscribe to the first report information. After the SMF receives the subscription from the PCF, the SMF may send the subscription to the UPF.

The UPF may detect the synchronization delay difference between the data flows, and upon determining that the synchronization delay difference between the at least two data flows is larger than the threshold, send the second report information to the SMF.

The second report information may be configured to indicate at least the synchronization delay difference between the at least two data flows (e.g., the synchronization delay difference between the first data flow and the second data flow), and the SMT may send the synchronization delay difference to the PCF after receiving the second report information.

In a possible implementation, in response to the PCF subscribing to the first report information to the SMF, the SMF subscribes to the second report information to the UPF, wherein the first report information is subscribed to by the PCF to the SMF.

The PCF may receive the threshold associated with the data flow from the AF and subscribe to the first report information to the SMF. The SMF may subscribe to the second report information to the UPF when it receives the subscription from the PCF. The UPF sends the second report information to the SMF when the synchronization delay difference is larger than the threshold.

In a possible implementation, the SMF receives the threshold sent by the PCF, and the SMF sends the threshold to the UPF.

The PCF may send the threshold to the SMF in the case of subscription.

After the PCF sends the threshold to the SMF, the SMF may send the threshold to the UPF, and the UPF monitors the synchronization delay difference between the data flows and sends the second report information to the SMF when the synchronization delay difference between at least two data flows is larger than the threshold.

An embodiment of the present disclosure also provides a method for synchronizing data flows performed by a UPF. It is to be noted that the method corresponds to the embodiment at the SMF side and/or PCF side and/or access network side, and therefore the same explanation or feature will not be repeated, and may be referred to the embodiment at a corresponding side.

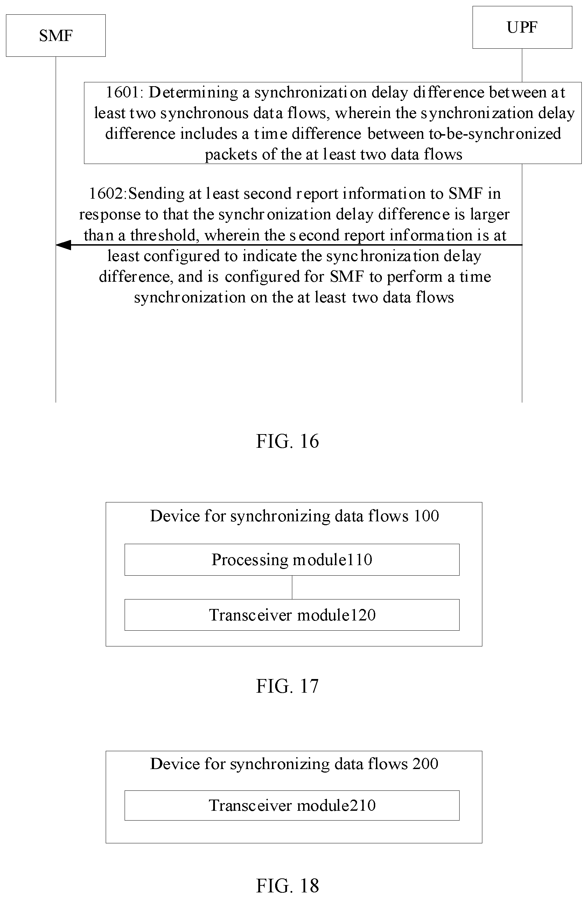

As shown in FIG. 16, an exemplary embodiment provides a method for synchronizing data flows, which may be performed by a UPF, and includes:
step 1601, determining a synchronization delay difference between at least two synchronous data flows, wherein the synchronization delay difference includes a time difference between to-be-synchronized packets of the at least two data flows; and
step 1602, sending at least second report information to an SMF in response to that the synchronization delay difference is larger than a threshold, wherein the second report information is at least configured to indicate the synchronization delay difference, and is configured for the SMF to perform a time synchronization on the at least two data flows.

The UPF may receive the data flow from an AF server (e.g., an XR application server) and send the data flow to the access network device.

The synchronization delay difference may include at least one of a current synchronization delay difference between the data flows or a synchronization delay difference between the data flows predicted by the core network device.

In a possible implementation, the synchronization delay difference may include a time difference between the arrivals of to-be-synchronized packets of the respective data flows at the core network device.

In a possible implementation, the synchronization delay difference between at least two synchronous data flows may include a time difference between the arrivals of the to-be-synchronized packets of the respective data flows at the UPF.

In a possible implementation, the synchronization delay difference between at least two synchronous data flows may be determined by the UPF.

The time at which the data flow arrives at the UPF may be a time at which all packets in the data flow arrive at the UPF.

In a possible implementation, the UPF may determine the synchronization delay difference between the two data flows after both the two data flows arrive at the UPF.

In a possible implementation, the UPF may start to determine whether the synchronization delay difference between the two data flows is larger than the threshold after one of the two data flows arrives at the UPF.

For example, after one of the two data flows arrives at the UPF, the UPF may starts a timer, and a timing value of the timer may be the threshold. When the timer expires, if the UPF has not received the other data flow, the UPF starts to determine that the synchronization delay difference between the two data flows is larger than the threshold.

The PCF may subscribe to an event of "a synchronization delay difference between two or more data flows of the service is larger than a threshold" to the SMF, i.e., subscribe to the first report information. After the SMF receives the subscription from the PCF, the SMF may send the subscription to the UPF.

The UPF may detect the synchronization delay difference between the data flows, and upon determining that the synchronization delay difference between the at least two data flows is larger than the threshold, send the second report information to the SMF.

In an embodiment, the method further includes:
receiving the threshold sent by the SMF.

The PCF may send the threshold to the SMF in the case of subscription.

After the PCF sends the threshold to the SMF, the SMF may send the threshold to the UPF, and the UPF monitors the synchronization delay difference between the data flows and sends the second report information to the SMF when the synchronization delay difference between at least two data flows is larger than the threshold.

In an embodiment, the second report information is configured to indicate at least the synchronization delay difference between the first data flow and the second data flow of the at least two synchronous data flows.

The second report information may be configured to indicate at least the synchronization delay difference between the at least two data flows (e.g., the synchronization delay difference between the first data flow and the second data flow), and the SMT may send the synchronization delay difference to the PCF after receiving the second report information.

The SMF may adjust the synchronization delay difference between the first data flow and the second data flow by adjusting the QoS parameter corresponding to the first data flow and/or the second data flow, so as to synchronize the data flows.

In this way, the SMF performs the time synchronization on at least two data flows when the synchronization delay difference between at least two synchronous data flows is larger than the threshold, so that the synchronization delay difference between the plurality of traffic flows may be kept within the threshold, thereby improving the user experience.

In an embodiment, the second report information is configured for the SMF to send first report information to a PCF and for the PCF to determine a PDB of the first data flow and/or a PDB of the second data flow based on the synchronization delay difference; and the PDB of the first data flow and/or the PDB of the second data flow is configured for an access network device to control an air interface transmission delay of a QoS flow to synchronize the at least two data flows.

Here, the PCC may stipulate the SMF to perform the time synchronization on the at least two data flows when the synchronization delay difference between the at least two synchronous data flows is larger than the threshold.

In a possible implementation, the SMF may send the first report information of the at least two data flows to the PCF based on a subscription of the PCF.

In a possible implementation, the first report information carries the synchronization delay difference between the first data flow and the second data flow.

In a possible implementation, the synchronization delay difference may include a time difference between the arrivals of the packet of the first data flow and the packet of the second data flow at the UPF.

The PCF may determine the PDB of the first data flow and/or the second data flow based on the received synchronization delay difference.

Here, the PDB may be configured to define an upper time limit of a possible delay of the data flow between a N6 termination point and the UE (transmitted via the UPF), and the core network device and/or the access network device (e.g., the base station, etc.) may configure a transmission resource for the data flow based on the PDB. For example, the data flow with a smaller PDB is configured with a transmission resource of a higher priority to shorten the transmission time of the packet of the data flow, and the data flow with a larger PDB is configured with a transmission resource of a lower priority.

The PCF may configure the PDB for the first data flow of the at least two data flows, thereby regulating the transmission time of the first data flow to achieve a synchronization effect.

In a possible implementation, if the packet of the first data flow arrives at the UPF later than the packet of the second data flow, the PCF may configure a smaller PDB for the first data flow that arrives at the UPF later, thereby reducing the transmission duration of the packet of the first data flow at the air interface. Therefore, the synchronization of the data flows is achieved.

In a possible implementation, if the packet of the first data flow arrives at the UPF earlier than the packet of the second data flow, the PCF may configure a larger PDB for the first data flow that arrives first, thereby increasing the transmission duration of the first data flow at the air interface. Therefore, the synchronization of the data flows is achieved.

In a possible implementation, different data flows correspond to different PCC rules, and the PDB of the data flow may carry a PCC rule macro corresponding to the data flow.

The PCF may update the PDB for the first data flow or the second data flow, or may update the PDB for both the first data flow and the second data flow.

The PDB may send the determined PDB of the first data flow and/or the second data flow to the SMF.

The SMF binds the first data flow and/or the second data flow to the corresponding QoS flow based on the received PDB.

For example, the QoS corresponding to a smaller PDB has a higher transmission priority, which can increase the time duration that packet of the data flow is transmitted at the interface.

The access network device transmits the data flows by transmitting the first data flow according to the QoS flow corresponding to the first data flow, and transmitting the second data flow according to the QoS flow corresponding to the second data flow. Therefore, synchronization of the data flows is achieved.

In a possible implementation, the PCF may subscribe to an event of "a synchronization delay difference between two or more data flows of the service is larger than a threshold" to the SMF. When the SMF detects the event of "a synchronization delay difference between the two or more data flows of the service is larger than a threshold", the SMF reports the event to the PCF, i.e., sends the synchronization delay difference to the PCF.

In a possible implementation, the PCF subscribes to the first report information to the SMF, and the threshold may be sent to the SMF during the subscription process.

In a possible implementation, the threshold is sent to the PCF by the AF associated with the data flow.

After the PCF receives the first report information reported by the SMF, the PCF updates the PDB value of the one or more data flows. After the PCF updates the PDB, the SMF binds the data flow to a corresponding QoS flow thereof. The access network device (e.g., a mechanism such as gNB) processes different data flows based on relevant QoS parameters (including the updated PDB values). The synchronization of the data flows is achieved, therefore the synchronization of the packets of the plurality of data flows received by the UE is improved. In this process, the access network device does not need to make changes for the synchronization of the data flows.

For example, as shown in FIG. 11, the time point T_UPF_In_2 at which the packet of data flow 2 arrives at the UPF is later than the time point T_UPF_In_1 at which the packet of data flow 1 arrives at the UPF, and the synchronization delay difference between the data flow 2 and the data flow 1 is larger than the threshold. The PCF may determine the PDB of the data flow 1 and/or the data flow 2 based on the synchronization delay difference. For example, the PCF may configure a smaller PDB for the data flow 2 that arrives later, therefore, the transmission duration of the packet of the data flow 2 at the air interface is reduced, and thus the data flows are synchronized. The PCF may send the updated PDB to the SMF and the SMF binds the data flow 1 and/or the data flow 2 to the QoS flows corresponding to the respective PDBs. The synchronization of the data flows is achieved by the access network device controlling the transmission duration of the data flow based on the QoS flow.

A specific example is provided below in connection with any of the above embodiments.

A PCF may adjust a PCC rule to ensure that a delay difference (a synchronization delay difference) between a plurality of data flows of a same application from one or more UEs may be kept within a delay difference threshold (a threshold).

### Manner 1:

As shown in FIG. 5, T_AF_Out indicates a time point at which an AF sends packets of a plurality of data flows associated with a service, T_UPF_In indicates a time point at which a UPF receives a packet, T_UPF_Out indicates a time point at which the UPF sends a packet, T_gNB_In indicates a time point at which a gNB receives a packet, T_gNB_Out indicates a time point at which the gNB sends a packet, and T_UE_In indicates a time point at which a UE receives a packet.

When the UPF detects that the delay difference between two or more traffic flows (data flows) of the service exceeds the threshold, it performs traffic synchronization, for example, it buffers the packet of the traffic flow (data flow) that arrives first and sends the packets of all the related traffic flows (data flows) at a similar time when all other traffic flows (data flows) arrive.

The delay difference threshold between two or more traffic flows (data flows) of the service is received from an SMF derived from a PCC rule for a traffic group.

When a PCF receives the delay difference threshold from an AF in a service request, the PCF generates the PCC rule for the traffic group that includes the delay difference threshold between two or more traffic flows (data flows) of the service received from the AF.

### Manner 2:

As shown in FIG. 11, T_AF_Out indicates a time point at which an AF sends packets of a plurality of data flows associated with a service, T_UPF_In indicates a time point at which a UPF receives a packet, T_UPF_Out indicates a time point at which the UPF sends a packet, T_gNB_In indicates a time point at which a gNB receives a packet, T_gNB_Out indicates a time point at which the gNB sends a packet, and T_UE_In indicates a time point at which a UE receives a packet.

When the PCF receives a delay difference threshold (a threshold) from the AF in a service request, the PCF subscribes to the event of "a delay difference (a synchronization delay difference) between two or more traffic flows (data flows) of the service is larger than a delay difference threshold (a threshold)" to the SMF. When the SMF detects the event of "a delay difference (a synchronization delay difference) between two or more traffic flows of the service is larger than a delay difference threshold (a threshold)", it reports the event to the PCF. The PCF then updates a PDB value of one or more service traffic flows, e.g., the PCF may allocate a shorter PDB value to the traffic flow which arrives at the UPF later. Once the PDB of the service traffic flow is updated, the SMF binds the traffic flow to a different QoS flow. The gNB handles the different QoS (data flow) based on an associated QoS parameter (including the PDB value).

When the SMF is subscribed to by the PCF to the event of "a delay difference (a synchronization delay difference) between two or more traffic flows (data flows) of the service is larger than a delay difference threshold (a threshold)", it subscribes to the same to the UPF. The UPF monitors the delay difference between two or more traffic flows of the service, and once the difference is larger than the delay difference threshold (threshold), the UPF reports the same to the SMF.

The above two manners may enable that the delay difference between two or more traffic flows of the service may not exceed the threshold, ensure a good user experience, and have no influence on the communication protocol and the like of the access network device, therefore the processing of the access network device does not need to be changed.

As shown in FIG. 17, an embodiment of the present disclosure provides a device 100 for synchronizing data flows, provided in a UPF and including:
a processing module 110, configured to determine that a synchronization delay difference between at least two data flows is larger than a threshold, and perform a time synchronization on the at least two data flows, wherein the synchronization delay difference includes a time difference between to-be-synchronized packets of the at least two data flows.

In an embodiment, the processing module 110 is configured to buffer a packet of a first data flow of the at least two data flows, wherein a synchronization delay difference between the first data flow and a second data flow of the at least two data flows is larger than the threshold, and a packet of the second data flow arrives at the UPF after the packet of the first data flow arrives at the UPF; and
the device further includes a transceiver module 120, configured to send a buffered packet of the first data flow within a predetermined time range from a first time point, wherein the first time point includes a time point at which the packet of the second data flow arrives at the UPF.

In an embodiment, the device further includes:
a transceiver module 120, configured to receive the threshold sent by an SMF.

As shown in FIG. 18, an embodiment of the present disclosure provides a device 200 for synchronizing data flows, provided in an SMF, and including a transceiver module 210 configured to:
receive a threshold between two synchronous data flows sent by a PCF; and
send the threshold to a UPF, wherein the threshold is configured for the UPF to compare the threshold with a synchronization delay difference between at least two synchronous data flows and to determine a time synchronization for the at least two data flows based on a comparing result from the comparing, wherein the synchronization delay difference includes a time difference between to-be-synchronized packets of the at least two data flows.

In an embodiment, the threshold is configured for the UPF to buffer a packet of a first data flow of the at least two data flows when determining that a synchronization delay difference between the packet of the first data flow and a packet of a second data flow of the at least two data flows is larger than the threshold, and to send a buffered packet of the first data flow within a predetermined time range from a first time point, wherein the first time point includes a time point at which the packet of the second data flow arrives at the UPF, and the packet of the second data flow arrives at the UPF after the packet of the first data flow arrives at the UPF.

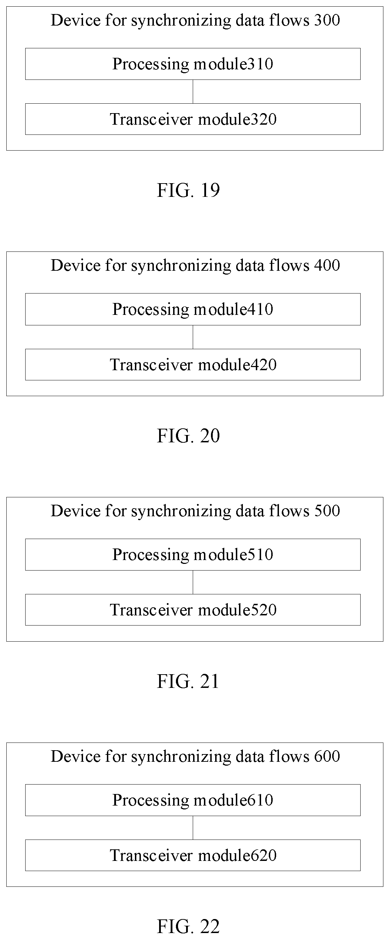

As shown in FIG. 19, an embodiment of the present disclosure provides a device 300 for synchronizing data flows, provided in a PCF, and including:
a processing module 310, configured to determine a threshold between at least two synchronous data flows, wherein a UPF performs a time synchronization on at least two data flows when a synchronization delay difference between the at least two synchronous data flows is larger than the threshold, and the synchronization delay difference includes a time difference between to-be-synchronized packets of the at least two data flows.

In an embodiment, the device further includes:
a transceiver module 320, configured to send the threshold to an SMF.

In an embodiment, the device further includes:
a transceiver module 320, configured to receive the threshold sent by an AF.

As shown in FIG. 20, an embodiment of the present disclosure provides a device 400 for synchronizing data flows, provided in an SMF, and including:
a processing module 410, configured to determine that a synchronization delay difference between at least two data flows is larger than a threshold, and performing a time synchronization on the at least two data flows, wherein the synchronization delay difference includes a time difference between to-be-synchronized packets of the at least two data flows.

In an embodiment, the device further includes a transceiver module 420 configured to:
send first report information to a PCF, wherein the first report information is configured to indicate that a synchronization delay difference between a first data flow and a second data flow is larger than the threshold, and the at least two data flows include the first data flow and the second data flow;
receive, from the PCT, a PCC rule carrying a PDB of the first data flow and/or a PCC rule carrying a PDB of the second data flow, wherein the PDB of the first data flow and/or the PDB of the second data flow is updated by the PCF based on the synchronization delay difference indicated by the first report information; and
the processing module 410 is specifically configured to bind the first data flow and/or the second data flow to a QoS flow of a corresponding PDB respectively, wherein the PDB of the first data flow and/or the PDB of the second data flow is configured for an access network device to control an air interface transmission delay of the QoS flow to synchronize the at least two data flows.

In an embodiment, the transceiver module 420 is specifically configured to:
send the first report information to the PCF in response to receiving second report information sent by a UPF, wherein the second report information is configured to indicate at least the synchronization delay difference, and the second report information is sent by the UPF when determining that the synchronization delay difference is larger than the threshold.

In an embodiment, the processing module 410 is further configured to:
determine that the PCF subscribes to the first report information to the SMF, and subscribing to the second report information to the UPF.

In an embodiment, the transceiver module 420 is further configured to:
receive the threshold sent by the PCF; and
send the threshold to the UPF.

As shown in FIG. 21, an embodiment of the present disclosure provides a device 500 for synchronizing data flows, provided in a PCF, and including:
a processing module 510, configured to determine a threshold between at least two synchronous data flows, wherein an SMF performs a time synchronization on at least two data flows when a synchronization delay difference between the at least two synchronous data flows is larger than the threshold, and the synchronization delay difference includes a time difference between to-be-synchronized packets of the at least two data flows.

In an embodiment, the device further includes:
a transceiver module 520, configured to send the threshold to the SMF.
In an embodiment, the device further includes:
a transceiver module 520, configured to receive first report information sent by the SMF, wherein the first report information is configured to indicate that a synchronization delay difference between a first data flow and a second data flow is larger than the threshold, and the first data flow and the second data flow belong to the at least two data flows;
the processing module 510 is further configured to update a PDB associated with the first data flow and/or a PDB associated with the second data flow based on the synchronization delay difference indicated by the first report information; and
the transceiver module 520 is further configured to send, to the SMF, a PCC rule carrying the PDB of the first data flow and/or a PCC rule carrying the PDB of the second data flow, wherein the PDB of the first data flow and/or the PDB of the second data flow is configured for an access network device to control an air interface transmission delay of a QoS flow to synchronize the at least two data flows.

In an embodiment, the first report information is subscribed to by the PCF to the SMF.

In an embodiment, the device further includes:
a transceiver module, configured to receive the threshold sent by an AF.

As shown in FIG. 22, an embodiment of the present disclosure provides a device 600 for synchronizing data flows, provided in a UPF, and including:
a processing module 610, configured to determine a synchronization delay difference between at least two synchronous data flows, wherein the synchronization delay difference includes a time difference between to-be-synchronized packets of the at least two data flows; and
a transceiver module 620, configured to send at least second report information to an SMF in response to that the synchronization delay difference being larger than a threshold, wherein the second report information is at least configured to indicate the synchronization delay difference, and is configured for the SMF to perform a time synchronization on the at least two data flows.

In an embodiment, the transceiver module 620 is further configured to:
receive the threshold sent by the SMF.

In an embodiment, the second report information is configured to indicate at least a synchronization delay difference between a first data flow and a second data flow of the at least two synchronous data flows.

In an embodiment, the second report information is configured for the SMF to send first report information to a PCF and for the PCF to determine a PDB of the first data flow and/or a PDB of the second data flow based on the synchronization delay difference; and wherein the PDB of the first data flow and/or the PDB of the second data flow is configured for an access network device to control an air interface transmission delay of a QoS flow to synchronize the at least two data flows.

An embodiment of the present disclosure provides a communication device including:
a processor; and
a memory for storing executable instructions of the processor,
wherein the processor is configured to implement the method for synchronizing data flows according to any embodiment of the present disclosure when running the executable instructions.

In an embodiment, the communication device may include, but is not limited to, at least one of: a UE and a network device. Here, the network device may include a core network device, an access network device, or the like. Here, the access network device may include a base station, and the core network may include an AMF and an SMF.

Herein, the processor may include various types of storage media, which are non-transitory computer storage media that can continue to record information stored thereon after the user equipment is powered down.

The processor may be connected to the memory via a bus or the like for reading an executable program stored on the memory, for example, at least one of the methods shown in FIGS. 3, 4, 6 to 10 and 12 to 16.

An embodiment of the present disclosure provides a computer storage medium having a computer executable program stored thereon that, when being executed by a processor, implements the method for synchronizing data flows according to any embodiment of the present disclosure, for example, at least one of the methods as shown in FIGS. 3, 4, 6 to 10 and 12 to 16.

With respect to the device or storage medium in the above embodiments, the specific manner in which each module performs an operation has been described in detail in the embodiments relating to the method, and will not be described in detail herein.

An embodiment of the present disclosure also provides a communication including a UPF, an SMF and a PCF, the UPF is configured to implement the method for synchronizing data flows according to any embodiment of the present disclosure, the SMF is configured to implement the method for synchronizing data flows according to any embodiment of the present disclosure, and the PCF is configured to implement the method for synchronizing data flows according to any embodiment of the present disclosure.

With respect to the communication system in the above embodiment, the specific manner in which each component performs an operation has been described in detail in the embodiments relating to the method, and will not be described in detail herein.

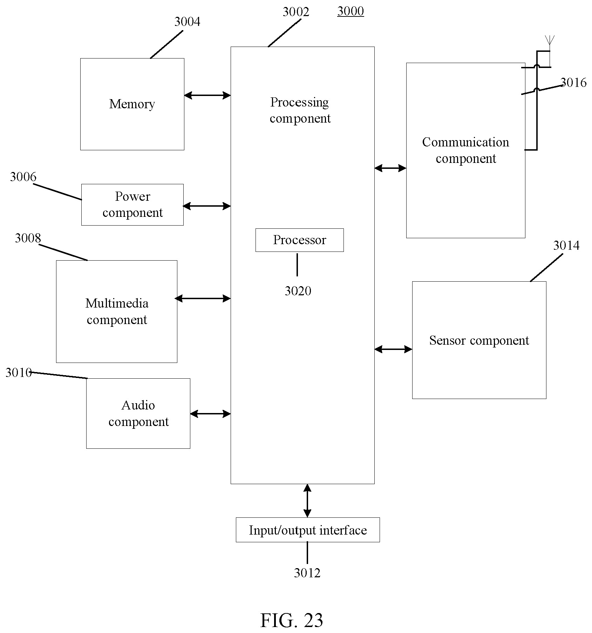

FIG. 23 is a block diagram of a UE 3000 according to an exemplary embodiment. For example, the UE 3000 may be a mobile phone, a computer, a digital broadcasting device, a messaging device, a game console, a tablet device, a medical device, a fitness device, a personal digital assistant, or the like.

Referring to FIG. 23, the UE 3000 may include one or more of a processing component 3002, a memory 3004, a power component 3006, a multimedia component 3008, an audio component 3010, an input/output (I/O) interface 3012, a sensor component 3014, and a communication component 3016.

The processing component 3002 generally controls the overall operations of the UE 3000, such as operations associated with display, telephone calls, data communications, camera operations, and recording operations. The processing component 3002 may include one or more processors 3020 to execute instructions to complete all or part of the steps of the foregoing method. In addition, the processing component 3002 may include one or more modules to facilitate interaction between the processing component 3002 and other components. For example, the processing component 3002 may include a multimedia module to facilitate the interaction between the multimedia component 3008 and the processing component 3002.

The memory 3004 is configured to store various types of data to support the operation at the UE 3000. Examples of these data include instructions for any application or method operating on the UE 3000, contact data, phone book data, messages, pictures, videos and the like. The memory 3004 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 3006 provides power to various components of the UE 3000. The power component 3006 may include a power management system, one or more power supplies, and other components associated with generating, managing, and distributing power for the UE 3000.

The multimedia component 3008 includes a screen that provides an output interface between the UE 3000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 3008 includes a front camera and/or a rear camera. When the UE 3000 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 3010 is configured to output and/or input audio signals. For example, the audio component 3010 includes a microphone (MIC), and when the UE 3000 is in an operation mode, such as a call mode, a recording mode, and a voice recognition mode, the microphone is configured to receive an external audio signal. The received audio signal can be further stored in the memory 3004 or sent via the communication component 3016. In some embodiments, the audio component 3010 further includes a speaker for outputting audio signals.

The I/O interface 3012 provides an interface between the processing component 3002 and a peripheral interface module. The above-mentioned peripheral interface module may be a keyboard, a click wheel, a button, and the like. These buttons may include but are not limited to home button, volume button, start button, and lock button.

The sensor component 3014 includes one or more sensors for providing the UE 3000 with various aspects of state evaluation. For example, the sensor component 3014 can detect the on/off status of the UE 3000 and the relative positioning of components. For example, the component is a display and keypad of the UE 3000. The sensor component 3014 can also detect the position change of the UE 3000 or a component of the UE 3000, the presence or absence of contact between the user and the UE 3000, the orientation or acceleration/deceleration of the UE 3000, and the temperature change of the UE 3000. The sensor component 3014 may include a proximity sensor configured to detect the presence of nearby objects when there is no physical contact. The sensor component 3014 may also include a light sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate wired or wireless communication between the UE 3000 and other devices. The UE 3000 can access a wireless network based on a communication standard, such as WiFi, 4G or 5G, or a combination thereof. In an exemplary embodiment, the communication component 3016 receives a broadcast signal or broadcast related information from an external broadcast management system via a broadcast channel. In an exemplary embodiment, the communication component 3016 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the UE 3000 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

An exemplary embodiment also provides a non-transitory computer-readable storage medium including instructions, such as the memory 3004 including instructions, and the instructions may be executed by the processor 3020 of the UE 3000 to complete the foregoing method. For example, the non-transitory computer-readable storage medium may be ROM, random access memory (RAM), CD-ROM, magnetic tape, floppy disk, optical data storage device and the like.

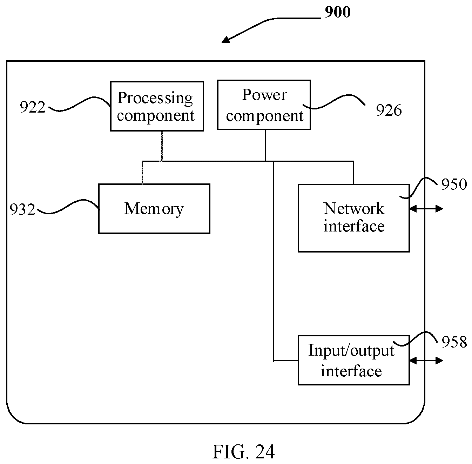

As shown in FIG. 24, an embodiment of the present disclosure provides a structure of a base station. For example, the base station 900 may be provided as a network device. Referring to FIG. 24, the base station 900 includes a processing component 922 which further includes one or more processors, and a memory resource which is represented by a memory 932 and is configured for storing instructions such as application programs executable by the processing component 922. The application program stored in the memory 932 may include one or more modules each corresponding to a set of instructions. Furthermore, the processing component 922 is configured to execute instructions to perform any of the above methods applied to the base station.

The base station 900 may also include a power component 926 configured to perform power management of the base station 900, a wired or wireless network interface 950 configured to connect the base station 900 to a network, and an input/output (I/O) interface 958. The base station 900 may operate based on an operating system stored in memory 932, such as Windows Server^{™}, Mac OS X^{™}, Unix^{™}, Linux^{™}, Free BSD^{™} or the like.

A person skilled in the art may easily conceive of other embodiments of the present disclosure upon consideration of the specification and practice of the invention disclosed herein. The present disclosure is intended to cover any variations, uses, or adaptations of the present disclosure that follow the general principles of the present disclosure and include the common knowledge or conventional technical means in the technical field not disclosed by the present disclosure. The specification and embodiments are to be regarded as exemplary only, with the true scope and spirit of the present disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A method for synchronizing data flows, performed by a user plane function, UPF, and comprising:
determining that a synchronization delay difference between at least two data flows is larger than a threshold, and performing a time synchronization on the at least two data flows, wherein the synchronization delay difference comprises a time difference between to-be-synchronized packets of the at least two data flows.

2. The method according to claim 1, wherein performing the time synchronization on the at least two data flows comprises:
buffering a packet of a first data flow of the at least two data flows, wherein a synchronization delay difference between the first data flow and a second data flow of the at least two data flows is larger than the threshold, and a packet of the second data flow arrives at the UPF after the packet of the first data flow arrives at the UPF; and
sending a buffered packet of the first data flow within a predetermined time range from a first time point, wherein the first time point comprises a time point at which the packet of the second data flow arrives at the UPF.

3. The method according to claim 1 or 2, further comprising:
receiving the threshold sent by a session management function, SMF.

4. A method for synchronizing data flows, performed by an SMF, and comprising:
receiving a threshold between two synchronous data flows sent by a policy control function, PCF; and
sending the threshold to a UPF, wherein the threshold is configured for the UPF to compare the threshold with a synchronization delay difference between at least two synchronous data flows and to determine a time synchronization for the at least two data flows based on a comparing result from the comparing, wherein the synchronization delay difference comprises a time difference between to-be-synchronized packets of the at least two data flows.

5. The method according to claim 4, wherein the threshold is configured for the UPF to buffer a packet of a first data flow of the at least two data flows when determining that a synchronization delay difference between the packet of the first data flow and a packet of a second data flow of the at least two data flows is larger than the threshold, and to send a buffered packet of the first data flow within a predetermined time range from a first time point, wherein the first time point comprises a time point at which the packet of the second data flow arrives at the UPF, and the packet of the second data flow arrives at the UPF after the packet of the first data flow arrives at the UPF.

6. A method for synchronizing data flows, performed by a PCF, and comprising:
determining a threshold between at least two synchronous data flows, wherein a UPF performs a time synchronization on at least two data flows when a synchronization delay difference between the at least two synchronous data flows is larger than the threshold, and the synchronization delay difference comprises a time difference between to-be-synchronized packets of the at least two data flows.

7. The method according to claim 6, further comprising: sending the threshold to an SMF.

8. The method according to claim 6, wherein determining the threshold between the at least two synchronous data flows comprises:
receiving the threshold sent by an application function, AF.

9. A method for synchronizing data flows, performed by an SMF, and comprising: determining that a synchronization delay difference between at least two data flows is larger than a threshold, and performing a time synchronization on the at least two data flows, wherein the synchronization delay difference comprises a time difference between to-be-synchronized packets of the at least two data flows.

10. The method according to claim 9, further comprising:
sending first report information to a PCF, wherein the first report information is configured to indicate that a synchronization delay difference between a first data flow and a second data flow is larger than the threshold, and the at least two data flows comprise the first data flow and the second data flow;
receiving, from the PCT, a policy control and charging, PCC, rule carrying a packet delay budget, PDB, of the first data flow and/or a PCC rule carrying a PDB of the second data flow, wherein the PDB of the first data flow and/or the PDB of the second data flow is updated by the PCF based on the synchronization delay difference indicated by the first report information; and
binding the first data flow and/or the second data flow to a quality of service, QoS, flow of a corresponding PDB respectively, wherein the PDB of the first data flow and/or the PDB of the second data flow is configured for an access network device to control an air interface transmission delay of the QoS flow to synchronize the at least two data flows.

11. The method according to claim 10, wherein sending the first report information to the PCF comprises:
sending the first report information to the PCF in response to receiving second report information sent by a UPF, wherein the second report information is configured to indicate at least the synchronization delay difference, and the second report information is sent by the UPF when determining that the synchronization delay difference is larger than the threshold.

12. The method according to claim 11, further comprising:
determining that the PCF subscribes to the first report information to the SMF, and subscribing to the second report information to the UPF.

13. The method according to any one of claims 9 to 12, further comprising:
receiving the threshold sent by the PCF; and
sending the threshold to the UPF.

14. A method for synchronizing data flows, performed by a PCF, and comprising:
determining a threshold between at least two synchronous data flows, wherein an SMF performs a time synchronization on at least two data flows when a synchronization delay difference between the at least two synchronous data flows is larger than the threshold, and the synchronization delay difference comprises a time difference between to-be-synchronized packets of the at least two data flows.

15. The method according to claim 14, further comprising: sending the threshold to the SMF.

16. The method according to claim 14, further comprising:
receiving first report information sent by the SMF, wherein the first report information is configured to indicate that a synchronization delay difference between a first data flow and a second data flow is larger than the threshold, and the first data flow and the second data flow belong to the at least two data flows;
updating a PDB associated with the first data flow and/or a PDB associated with the second data flow based on the synchronization delay difference indicated by the first report information; and
sending, to the SMF, a PCC rule carrying the PDB of the first data flow and/or a PCC rule carrying the PDB of the second data flow, wherein the PDB of the first data flow and/or the PDB of the second data flow is configured for an access network device to control an air interface transmission delay of a QoS flow to synchronize the at least two data flows.

17. The method according to claim 16, wherein the first report information is subscribed to by the PCF to the SMF.

18. The method according to any one of claims 14 to 17, wherein determining the threshold between the at least two synchronous data flows comprises:
receiving the threshold sent by an AF.

19. A method for synchronizing data flows, performed by a UPF, and comprising:
determining a synchronization delay difference between at least two synchronous data flows, wherein the synchronization delay difference comprises a time difference between to-be-synchronized packets of the at least two data flows; and
sending at least second report information to an SMF in response to that the synchronization delay difference being larger than a threshold, wherein the second report information is at least configured to indicate the synchronization delay difference, and is configured for the SMF to perform a time synchronization on the at least two data flows.

20. The method according to claim 19, further comprising:
receiving the threshold sent by the SMF.

21. The method according to claim 19, wherein the second report information is configured to indicate at least a synchronization delay difference between a first data flow and a second data flow of the at least two synchronous data flows.

22. The method according to claim 21, wherein the second report information is configured for the SMF to send first report information to a PCF and for the PCF to determine a PDB of the first data flow and/or a PDB of the second data flow based on the synchronization delay difference; and wherein the PDB of the first data flow and/or the PDB of the second data flow is configured for an access network device to control an air interface transmission delay of a QoS flow to synchronize the at least two data flows.

23. A device for synchronizing data flows, provided in a UPF, and comprising:
a processing module, configured to determine that a synchronization delay difference between at least two data flows is larger than a threshold, and to perform a time synchronization on the at least two data flows, wherein the synchronization delay difference comprises a time difference between to-be-synchronized packets of the at least two data flows.

24. A device for synchronizing data flows, provided in an SMF, and comprising a transceiver module configured to:
receive a threshold between two synchronous data flows sent by a PCF; and
send the threshold to a UPF, wherein the threshold is configured for the UPF to compare the threshold with a synchronization delay difference between at least two synchronous data flows and determine a time synchronization for the at least two data flows based on a comparing result from the comparing, wherein the synchronization delay difference comprises a time difference between to-be-synchronized packets of the at least two data flows.

25. A device for synchronizing data flows, provided in a PCF, and comprising:
a processing module, configured to determine a threshold between at least two synchronous data flows, wherein a UPF performs a time synchronization on at least two data flows when a synchronization delay difference between the at least two synchronous data flows is larger than the threshold, and the synchronization delay difference comprises a time difference between to-be-synchronized packets of the at least two data flows.

26. A device for synchronizing data flows, provided in an SMF, and comprising:
a processing module, configured to determine that a synchronization delay difference between at least two data flows is larger than a threshold, and to perform a time synchronization on the at least two data flows, wherein the synchronization delay difference comprises a time difference between to-be-synchronized packets of the at least two data flows.

27. A device for synchronizing data flows, provided in a PCF, and comprising:
a processing module, configured to determine a threshold between at least two synchronous data flows, wherein an SMF performs a time synchronization on at least two data flows when a synchronization delay difference between the at least two synchronous data flows is larger than the threshold, and the synchronization delay difference comprises a time difference between to-be-synchronized packets of the at least two data flows.

28. A device for synchronizing data flows, provided in a UPF, and comprising:
a processing module, configured to determine a synchronization delay difference between at least two synchronous data flows, wherein the synchronization delay difference comprises a time difference between to-be-synchronized packets of the at least two data flows; and
a transceiver module, configured to send at least second report information to an SMF in response to that the synchronization delay difference being larger than a threshold, wherein the second report information is at least configured to indicate the synchronization delay difference, and is configured for the SMF to perform a time synchronization on the at least two data flows.

29. A communication device, comprising:
a processor; and
a memory for storing executable instructions of the processor,
wherein the processor is configured to implement the device for synchronizing data flows according to any one of claims 1 to 3, 4 or 5, or 6 to 8, or 9 to 13, or 14 to 18, or 19 to 22 when running the executable instructions.

30. A computer storage medium having a computer executable program stored thereon that, when being executed by a processor, implements the device for synchronizing data flows according to any one of claims 1 to 3, 4 or 5, or 6 to 8, or 9 to 13, or 14 to 18, or 19 to 22.

31. A communication system comprising a UPF, an SMF and a PCF, wherein the UPF is configured to implement the method according to any one of claims 1 to 3, or 19 to 22, the SMF is configured to implement the method according to any one of claims 4 or 5, or 9 to 13, and the PCF is configured to implement the method according to any one of claims 6 to 8, or 14 to 18.
